# EUROPEAN PATENT APPLICATION

(11) **EP 4 793 197 A1**
(43) Date of publication of application: **19.08.2026**
(21) Application number: 24881820.5
(22) Date of filing: 24.12.2024
(51) Int. Cl.: B65D 90/00, H01M 50/204

(54) **ENERGY STORAGE APPARATUS, ENERGY STORAGE SYSTEM, AND CHARGING NETWORK**

(30) Priority: 24.10.2023 CN 202322858858 U; 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN); LI, Zhonghong, Ningde, Fujian 352100 (CN)
(74) Representative: Kraus & Lederer PartGmbB
(86) International application number: PCT/CN2024/141944
(87) International publication number: WO 2025/087461

(57) **Abstract**

An energy storage apparatus, an energy storage system, and a charging network. The energy storage apparatus comprises a control module (30), a plurality of bins (10) and a plurality of energy units (2). The plurality of bins (10) are arranged in a first direction of the bins, the plurality of energy units (2) are accommodated in at least one bin, and the control module (30) is used for performing electrical control on the plurality of energy units (2), wherein the size of at least one of the plurality of bins in the first direction is less than the size of a standard container in the first direction, the sum of the sizes of the plurality of bins in the first direction is less than the sum of the sizes of one or more standard containers in the first direction, and the first direction is a length direction or a width direction or a height direction of the bins.

## Description

This application claims priority to Chinese Patent Application No. PCT/CN2024/112473 filed on August 15, 2024, Chinese Patent Application No. PCT/CN2024/112498 filed on August 15, 2024, Chinese Patent Application No. PCT/CN2024/111558 filed on August 12, 2024, Chinese Patent Application No. PCT/CN2024/112387 filed on August 15, 2024, Chinese Patent Application No. 202421984591.6 filed on August 15, 2024, Chinese Patent Application No. PCT/CN2024/112558 filed on August 15, 2024, Chinese Patent Application No. PCT/CN2024/106588 filed on July 19, 2024, Chinese Patent Application No. PCT/CN2024/104575 filed on July 9, 2024, Chinese Patent Application No. PCT/CN2024/086624 filed on April 8, 2024, Chinese Patent Application No. PCT/CN2024/104413 filed on July 9, 2024, Chinese Patent Application No. 202322858858.9 filed on October 24, 2023, Chinese Patent Application No. PCT/CN2024/086600 filed on April 8, 2024, Chinese Patent Application No. PCT/CN2024/127187 filed on October 24, 2024, which is incorporated by reference in its entirety.

### TECHNICAL FIELD

The present disclosure relates to the technical field of batteries, and particularly relates to an energy storage apparatus, an energy storage system, and a charging network.

### BACKGROUND

With the rapid development of technology, electric energy has become an indispensable energy source in people work and daily life. To ensure a smooth supply of electric energy to realize normal work and daily activities, energy storage apparatuses are needed. As apparatuses for cyclically storing and releasing the electric energy, the energy storage apparatuses can store the electric energy by charging or supply the stored electric energy to electrical apparatuses by discharging. The energy storage apparatuses are widely used in the fields of industrial power supply, household power supply, temporary power supply, mobile power supply, wind power generation, solar power generation, energy storage power stations, etc.

In the development of the energy storage apparatuses, besides improving their performance, how to reduce their use cost is also an issue that cannot be ignored. Therefore, how to reduce the use cost of the energy storage apparatuses is a technical problem that continues to be relieved in energy storage technology.

### SUMMARY

In view of the above, the embodiments of the present disclosure are expected to provide an energy storage apparatus, an energy storage system, and a charging network, aiming to reduce the use cost of the energy storage apparatus.

To achieve above objective, in a first aspect, the embodiment of the present disclosure provides the energy storage apparatus, which includes:
a plurality of bins which are arranged in a first direction;
a plurality of energy units which are accommodated in at least one bin; and
a control module configured to perform electrical control on the plurality of energy units;
in which, a size of at least one of the plurality of bins in the first direction is less than a size of one standard container in the first direction, a sum of the sizes of the plurality of bins in the first direction is less than a sum of the sizes of one or more standard containers in the first direction, and the first direction is a length direction or a width direction or a height direction of the bins.

According to the energy storage apparatus provided by the embodiment of the present disclosure, by reducing the sizes of the bins, the manufacturing cost of the energy storage apparatus can be reduced, moreover, the total weight of the bins and parts in the bins can be reduced, which is conducive to relieving the problem of overweight in transportation, and reducing the transportation cost of the energy storage apparatus, thereby reducing the use cost of the energy storage apparatus. The sum of the sizes of the plurality of bins in the first direction is set to be less than the sum of the sizes of one or more standard containers in the first direction, that is, the plurality of bins can occupy the space of one or more standard containers, which is conducive to further reducing the transportation cost of the energy storage apparatus.

In some embodiments, m bins are provided, the sum of the sizes of m1 bins in the m bins in the first direction is less than the sum of the sizes of n standard containers in the first direction, m is greater than or equal to m1, m1 is greater than or equal to 2, and m1 is greater than n.

In the embodiments, the sum of the sizes of the m1 bins in the first direction is less than the sum of the sizes of the n standard containers in the first direction, m1 is greater than n, that is, the m1 bins can occupy the spaces of the n standard containers, which is conducive to further reducing the transportation cost of the energy storage apparatus. In addition, by reducing the sizes of the bins, the manufacturing cost of the energy storage apparatus can be reduced, and moreover, the total weight of the bin and the parts in the bins can be reduced, which is conducive to relieving the problem of overweight in transportation, and reducing the transportation cost of the energy storage apparatus, thereby reducing the use cost of the energy storage apparatus.

In some embodiments, m1=2, n=1; or, m1=3, n=1; or, m1=3, n=2.

In some embodiments, the first direction is the height direction of the bins, the sizes of the bins in the length direction are consistent with the sizes of the standard containers in the length direction, and the sizes of the bins in the width direction are consistent with the sizes of the standard containers in the width direction.

In the embodiments, the sizes of the bins in the length direction are set to be consistent with the sizes of the standard containers in the length direction, and the sizes of the bins in the width direction are set to be consistent with the sizes of the standard containers in the width direction, which is conducive to facilitate compatibility with transportation tools and lifting appliances of existing standard containers, and reducing the transportation cost of the energy storage apparatus, thereby reducing the use cost of the energy storage apparatus.

In some embodiments, the size of each bin in the first direction is less than the size of one standard container in the first direction.

Therefore, the manufacturing cost of the energy storage apparatus can be further reduced, and accordingly, the transportation cost of the energy storage apparatus is further reduced.

In some embodiments, the energy storage apparatus includes a thermal management module which is configured to manage temperatures of the plurality of energy units of the energy storage apparatus.

In the embodiments, the thermal management module is arranged and can manage the temperatures of the energy units, thus reducing the risk of temperature runaway of the energy units.

In some embodiments, m bins are provided, the plurality of energy units are accommodated in the m bins, and the thermal management module is configured to manage the temperatures of the plurality of energy units in the m bins.

That is, the energy storage apparatus shares the thermal management module to form a complete system, which is beneficial to saving space.

In some embodiments, m bins are provided, the plurality of energy units are accommodated in the m bins, and the control module is configured to perform electrical control on the plurality of energy units in the m bins.

That is, the energy storage apparatus shares the control module to form a complete system, which is beneficial to saving space.

In some embodiments, the control module is accommodated in at least one bin.

Some of the bins or all the bins accommodate the control module.

In some embodiments, the thermal management module is accommodated in at least one bin.

Some of the bins or all the bins accommodate the thermal management module.

In some embodiments, at least some of the bins are internally provided with energy bins and control bins, the energy bins are configured to accommodate at least one energy unit, and at least part of the control module and/or at least part of the thermal management module are/is accommodated in the control bins.

In the embodiments, at least some of the bins are internally provided with the energy bins and the control bins, and at least part of the control module and/or at least part of the thermal management module are/is arranged in the bins, so that the spaces in the bins can be fully utilized, which further increases the space utilization rate of the bins.

In some embodiments, at least some of the control bins and energy bins are arranged in the height direction of the bins; and/or,
at least some of the control bins and energy bins are arranged in the length direction of the bins.

Some of the control bins and energy bins or all the control bins and energy bins are arranged in the height direction of the bins.

Some of the control bins and energy bins or all the control bins and energy bins are arranged in the length direction of the bins.

In some embodiments, at least some of the control bins accommodate the thermal management module, and the thermal management module is located in the topmost bin.

In the embodiments, the thermal management module is located on the top of the topmost bin, and upper portions of the thermal management module is not shielded by shielding objects, which facilitates heat dissipation of the thermal management module, thereby prolonging the service life of the energy storage apparatus. Moreover, the overall height of center of gravity of a single bin can be reduced, thus improving the transportation safety. In addition, it is designed to be separated from the energy bins, thus the heat preservation and insulation effects of the energy bins can be improved; and moreover, the thermal management module shields the heat radiation at the top, so that the influence of the heat radiation on the interiors of the energy bins can be reduced.

In some embodiments, at least some of the control bins accommodate the control module; the control module and the energy bins are arranged in the height direction of the bins; or,
the control module and the energy bins are arranged in the length direction of the bins.

The height of an operating part meets the requirement of human engineering, maintenance personnel can reach an operating handle of a control part by standing on one side of the bins, which facilitates maintenance and overhaul; and moreover, the control bins are arranged on the top, which is conducive to reducing lengths of high-voltage wire harnesses and low-voltage wire harnesses connected to the upper bins, thereby reducing the cost.

That is, the control module can be arranged at left ends or right ends of the energy bins, or arranged between two energy bins in the length direction.

In some embodiments, at least some of the bins include first separators;
the first separators are arranged between the energy bins and the control bins, and the energy bins and the control bins share the first separators; and/or,
a plurality of control bins are provided, the first separators are arranged between adjacent control bins, and the adjacent control bins share the first separators.

The first separators can improve the structural strength of the bins and can also improve the sealing performance and heat preservation performance of the energy bins.

In some embodiments, the first separators are filled with heat insulation media.

The heat insulation media are beneficial to improving the structural strength of the first separators, can also achieve the effects of flame retardance and heat preservation, thus reducing the heat loss of the energy bins and the influence of external heat on the energy units in the energy bins.

In some embodiments, the sizes of the bins which accommodate the thermal management module in the first direction are greater than the sizes of other bins in the first direction.

Therefore, the spaces in the bins which accommodate the thermal management module can be increased, and accordingly, the influence of the thermal management module on the volume for accommodating the energy units can be reduced, and the bins have enough space to accommodate the energy units and the thermal management module. In addition, the thermal management module with higher refrigerating capacity can be placed, thereby improving the thermal management capacity.

In some embodiments, at least some of the control module is arranged outside the bins; and/or,

at least part of the thermal management module is arranged outside the bins.

At least some of the control module is arranged outside the bins, so that the influence of the control module on the energy units can be reduced to a certain degree, and the control module cannot occupy the spaces in the bins.

At least part of the thermal management module is arranged outside the bins, so that the influence of the thermal management module on the energy units can be reduced to a certain degree, and the thermal management module cannot occupy the spaces in the bins.

In some embodiments, the energy storage apparatus includes pipeline bins which are at least configured to accommodate some of connecting pipelines among the control module, the thermal management module or the energy units.

In the embodiments, the energy storage apparatus is provided with the pipeline bins which are configured to accommodate at least some of the connecting pipelines among the control module, the thermal management module, and the energy units, thus facilitating wiring and pipe passing, making the layout of the connecting pipelines reasonable, and facilitating maintenance and replacement.

In some embodiments, each bin is provided with the corresponding pipeline bin; or, some of the bins are provided with the pipeline bins, while other bins are not provided with the pipeline bins.

In some embodiments, at least some of the bins are internally provided with the energy bins and the control bins, the energy bins are configured to accommodate at least one energy unit, at least part of the control module and/or at least part of the thermal management module are/is accommodated in the control bins, the pipeline bins are arranged in the bins, and the pipeline bins and the energy bins are arranged in the length direction of the bins.

That is, the pipeline bins can be arranged at left ends or right ends of the energy bins, or arranged between two energy bins in the length direction.

In some embodiments, at least some of the bins include second separators which are arranged between the energy bins and the pipeline bins, and the energy bins and the pipeline bins share the second separators.

The second separators can improve the structural strength of the bins and can also improve the sealing performance and heat preservation performance of the energy bins.

In some embodiments, at least some of the bins include third separators which are arranged between the pipeline bins and at least some of the control bins, and the pipeline bins and at least some of the control bins share the third separators.

The third separators can improve the structural strength of the bins and can also improve the sealing performance and heat preservation performance of some of the control bins.

In some embodiments, at least some of the bins include fourth separators which divide the control bins into first bin bodies and second bin bodies, the first bin bodies and the second bin bodies share the fourth separators, the first bin bodies are configured to accommodate the thermal management module, and the second bin bodies are configured to accommodate the control module.

The first bin bodies are separated from the second bin bodies by the fourth separators, the fourth separators can separate the thermal management module from the control module, thus reducing the interference of the thermal management module on the control module, that is, the electromagnetic interference of a high-voltage line on low voltage can be reduced, and the influence of external rainfall or exposure to intensive sunlight on the control module can also be reduced.

In some embodiments, the first bin bodies and the second bin bodies are arranged in the width direction of the bins, and the first bin bodies are arranged on front sides of the second bin bodies.

In the embodiments, the first bin bodies are arranged on the front sides of the second bin bodies, that is, the first bin bodies are arranged on front sides of the bins, and water port of heat exchange pipelines are also arranged on front sides of the energy bins, that is, the water ports of the heat exchange pipelines are arranged on the front sides of the bins, therefore, the connection between the thermal management module and the heat exchange pipelines is facilitated, the number of elbows of the heat exchange pipelines can be reduced, further, the flow resistance is reduced, and the temperature control effect of the thermal management module is improved.

In some embodiments, the plurality of the bins include first bins and second bins, the first bins are located above the second bins, at least the first bins accommodate the plurality of the energy units, the thermal management module is arranged in the first bins and are arranged in the length direction of the first bins with the plurality of the energy units, and the control module is arranged in the first bins and/or the second bins.

In the embodiments, the thermal management module is accommodated in the control bins of the upper first bins, which facilitates the heat dissipation of the thermal management module, more heat dissipation channels can be provided for the thermal management module, thereby improving the temperature control effect of the thermal management module. Moreover, the overall height of center of gravity of a single energy storage cabinet can be reduced, thus improving the transportation safety. In addition, the thermal management module is arranged at end portions of the first bins, so that the spaces in the first bins are utilized to the maximum, thereby improving the structural compactness.

In some embodiments, at least the second bins accommodate the plurality of energy units, and the control module is arranged in the second bins and are arranged in the length direction of the second bins with the plurality of energy units.

In the embodiments, the control module is arranged in the second bins and are arranged in the length direction of the second bins with the plurality of energy units, and the thermal management module and the control module is arranged in the first bins and the second bins respectively, so that the thermal management module and the control module can be separated, and the interference of the thermal management module on the control module can be reduced; and in addition, the control module can be arranged at the end portions of the second bins, thus the spaces in the second bins are utilized to the maximum, thereby improving the structural compactness.

In some embodiments, at least some of the bins are provided with ventilation openings in top walls and/or side walls, and the ventilation openings are configured to perform ventilation on the thermal management module.

In the embodiments, the ventilation openings are formed in the top walls of the bins, which facilitates the heat dissipation of the thermal management module, and more heat dissipation channels can be provided for the thermal management module, thereby improving the temperature control effect of the thermal management module.

In some embodiments, each bin accommodates the plurality of energy units; at least some of the bins include first connectors which are electrically connected to the control module; each bin includes a second connector; the second connectors are electrically connected to the plurality of energy units; and each first connector is matched with the corresponding second connector.

In the embodiments, each first connector is matched with the corresponding second connector to realize rapid connection between the control module and the energy units, which facilitates the connection between the control module and the energy units.

In some embodiments, each bin accommodates the plurality of energy units; the energy storage apparatus includes a plurality of battery apparatuses, each battery apparatus including a thermal management part and the plurality of energy units; and the thermal management parts are configured to regulate the temperatures of the energy units;
at least some of the bins include third connectors, each bin includes a fourth connector, the third connectors communicate with the thermal management module, the fourth connectors communicate with the thermal management parts, and each third connector is matched with the corresponding fourth connector.

In the embodiments, the third connectors and the fourth connectors are matched to realize rapid communication between the thermal management parts and the thermal management module, which facilitates the mounting of the thermal management module.

In some embodiments, the thermal management module communicates with the plurality of thermal management parts through liquid cooling pipelines, the liquid cooling pipelines include main pipelines and a plurality of branch pipelines, the plurality of branch pipelines are connected to the main pipelines in parallel, the main pipelines communicate with the thermal management module, and the plurality of branch pipelines communicate with the plurality of thermal management parts respectively; and the main pipelines are located above the plurality of battery apparatuses, or, below the plurality of battery apparatuses.

The main pipelines are arranged above the plurality of battery apparatuses, or, below the plurality of battery apparatuses, which is conducive to shortening the liquid cooling pipelines, thereby reducing the cost, and improving the cooling efficiency.

In some embodiments, the control module includes at least one of a main control module, a power distribution module, a general control module, and a fire control module.

The main control module is configured to control the input and output of high-voltage electric energy of the energy units in the bins. The general control module is configured to control an on-off action of the main control module in the bins. The fire control module is configured to control fire elements to act when a fire occurs due to temperature imbalance in the bins, and the fire elements can be fire extinguishers and the like and can be arranged in the bins. The power distribution modules are configured to electrically connect the main control module, the general control module, and the fire control module, so as to facilitate the connection of circuits of the main control module, the general control module, and the fire control module as well as the normal operation of the main control module, the general control module, and the fire control module.

In some embodiments, the energy units are battery cells, and the weight of a single energy unit is 5-60 kg.

The energy units have proper weight, so that a proper amount of energy units can be accommodated in the bins, and the energy density is moderate while the transportation requirements are met.

In some embodiments, the energy storage apparatus includes an energy storage cabinet which includes the bins and parts arranged in the bins, the weight of the energy storage cabinet is M, and M is less than or equal to 35 tons.

In order for a single energy storage cabinet to meet the transportation limits in some countries, the overall weight of the energy storage cabinet is controlled to be within 35 tons and the integration level of the energy storage cabinet is as high as possible, so that the workload of mounting on site can be reduced; and moreover, the energy per unit area is increased, thus the cost input of customers can reduced.

In some embodiments, the energy storage apparatus includes the energy storage cabinet which includes the bins and the parts arranged in the bins, the weight of the energy storage cabinet is M, the total weight of energy units in the bins is M1, (M1/M) × 100% ≥ 60%.

In this way, on one hand, the weight ratio of the energy units in the bins per unit volume can be increased, thus increasing the electric quantity of the energy storage apparatus per unit volume; on the other hand, during the transportation of the energy storage apparatus, more energy units which contribute to energy storage capacity and are high in production difficulty and cannot be produced at a destination are transported, while other structures can be produced at a place closer to the destination without transportation or with reduced transportation; and after the bins are assembled into the energy storage apparatus, the transportation cost of the assembled energy storage apparatus is reduced.

In some embodiments, (M1/M) × 100% ≥ 80%.

Therefore, the transportation cost of the assembled energy storage apparatus is further reduced.

In some embodiments, the energy storage apparatus includes the energy storage cabinet which includes the bins and the parts arranged in the bins, wherein the weight of the energy storage cabinet is M; the plurality of battery apparatuses are arranged in the bins, each including a box and the plurality of energy units; the plurality of energy units are accommodated in the box; and the total weight of the battery apparatuses is M2, 70% ≤ (M2/M) × 100% ≤ 90%.

The energy density of the energy storage cabinet and the structural strength of the bins can be balanced, thus improving the practicability of the bins.

In some embodiments, volumes of the bins are V, the total volume of the energy units in the bins is V1, (V1/V) × 100% ≥ 30%.

On one hand, the volume proportion of the energy units in the bins per unit volume can be increased, thus increasing the electric quantity of the energy storage apparatus per unit volume; on the other hand, during the transportation of the energy storage apparatus, more energy units which contribute to energy storage and are high in production difficulty and cannot be produced at the destination are transported, while other functional elements such as control elements of the energy storage apparatus can be produced at the place closer to the destination without transportation or with reduced transportation; and after the bins are assembled into the energy storage apparatus, the transportation cost of the assembled energy storage apparatus is reduced.

In some embodiments, (V1/V) × 100% ≥ 50%.

The transportation cost of the assembled energy storage apparatus is further reduced.

In some embodiments, the volumes of the bins are V; the plurality of battery apparatuses are arranged in the bins, each including the box and the plurality of energy units; the plurality of energy units are accommodated in the box; and the total volume of the battery apparatuses is V2, 50% ≤ (V2/V) × 100% ≤ 80%.

The energy density of the energy storage apparatus and the structural strength of the bins can be balanced, thus improving the practicability of the bins.

In some embodiments, the energy storage apparatus includes the energy storage cabinet which includes the bins and the parts arranged in the bins, wherein an energy of the energy storage cabinet is E, the sizes of the bins in the length direction are a, the sizes of the bins in the width direction are b, 250KW/*m*² ≤ E/(a × b) ≤ 700KW/*m*².

The energy density of the energy storage apparatus and the mass settings of the bins are balanced, thus improving the practicability of the energy storage apparatus and facilitating the transportation of the energy storage apparatus.

In some embodiments, 450KW/*m*² ≤ E/(a × b) ≤ 600KW/*m*².

The energy density of the energy storage apparatus and the mass settings of the bins can be further improved, thus facilitating the transportation of the energy storage apparatus 100.

In some embodiments, every two adjacent bins are welded, clamped, locked or connected by a fixing member in the height direction.

The risk that every two adjacent bins relatively displace after being stacked is reduced, and thus the structural stability of the energy storage apparatus is improved.

In some embodiments, the plurality of bins include the first bins and the second bins, the first bins are located above the second bins, limiting pins are arranged at the bottoms of the first bins, limiting holes are formed in the tops of the second bins, and the limiting pins are clamped in the limiting holes.

Every two adjacent bins are fixed by clamping the limiting pins into the limiting holes, and the aim of limiting relative displacement of every two adjacent bins is fulfilled by a simple structure.

In some embodiments, first limiting members are arranged at the bottoms of the first bins and are provided with limiting slots; second limiting members are arranged on the tops of the second bins and are provided with limiting holes; and both ends of the limiting pins are clamped in the limiting slots and the limiting holes respectively.

Both ends of the limiting pins are clamped into the limiting slots and the limiting holes respectively to fix the every two adjacent bins, and the aim of limiting relative displacement of every two adjacent bins is fulfilled by a simple structure.

In some embodiments, m bins are provided, and the first direction is the height direction of the bins; the energy storage apparatus further includes connecting mechanisms which are configured to connect every two adjacent bins in the height direction;
the connecting mechanisms include supporting members which are arranged between every two adjacent bins in the height direction; the sum total of the sum of the sizes of the m1 bins in the m bins in the height direction and the sum of the sizes of m1-1 supporting members in the height direction is less than the sum of the sizes of n standard containers in the height direction, m is greater than or equal to m1, m1 is greater than or equal to 2, and m1 is greater than n.

The bins are connected through the connecting mechanisms, which makes the bins stacked more stable. When transporting the bins, the sum total of the sum of the sizes of the m1 bins in the height direction and the sum of the sizes of the supporting members arranged between every two adjacent bins in the m1 bins in the height direction is less than the sum of the heights of the n standard containers, and therefore, the use cost of the energy storage apparatus can be reduced.

In some embodiments, the first direction is the height direction of the bins, and in the height direction of the bins, the heights of some of the plurality of bins are not equal to the heights of other bins; or the plurality of bins in the height direction have the same size.

Therefore, the capacity flexibility of the bins is improved, and different requirements are met.

Therefore, the manufacturing process is simplified, and the cost is reduced.

In some embodiments, the first direction is the height direction of the bins, and the standard containers are 20-foot standard containers, with the heights of 2,896 mm, 2,591 mm or 2,438 mm.

In some embodiments, at least some of the bins are internally provided with the energy bins and the control bins, the energy bins are configured to accommodate at least one energy unit, and at least part of the control module and/or at least part of the thermal management module are/is accommodated in the control bins; at least one side of the energy bins in the width direction is provided with a first bin door, and at least one side of the control bins and/or the pipeline bins in the width direction is provided with a second bin door, or, the sides, deviating from the energy bins, of the control bins and/or the pipeline bins in the length direction are provided with the second bin doors.

In the embodiments, it helps reduce the land wastage caused by the traditional requirement to leave a maintenance access of over 3 m between adjacent bins, only a normal maintenance access for paint repair is needed to be reserved between matts-shaped bins, which improves the land investment returns of the users and increases the energy yield per unit area for the users.

The embodiment of the present disclosure further provides the energy storage apparatus which includes bins and a plurality of energy units, and the energy units are accommodated in the bins;
sizes of the bins in a first direction are greater than one third of sizes of standard containers in the first direction and less than one half of the sizes of the standard containers in the first direction; or,
the sizes of the bins in the first direction are greater than one half of the sizes of the standard containers in the first direction and less than the size of one standard container in the first direction.

According to the energy storage apparatus provided by the embodiment of the present disclosure, by reducing the sizes of the bins, the manufacturing cost of the energy storage apparatus can be reduced, moreover, the total weight of the bins and parts in the bins can be reduced, which is conducive to relieving the problem of overweight in transportation, and reducing the transportation cost of the energy storage apparatus, thereby reducing the use cost of the energy storage apparatus.

The embodiment of the present disclosure further provides the energy storage system which includes a power conversion apparatus and the above energy storage apparatus, and the power conversion apparatus is configured to electrically connect a power generation apparatus with the energy storage apparatus.

The embodiment of the present disclosure further provides the charging network which includes a charging pile and the above energy storage apparatus or the above energy storage system, and the energy storage apparatus is configured to provide electric energy for the charging pile.

### BRIEF DESCRIPTION OF THE DRAWINGS

FIG. 1 is a schematic structural diagram of a charging network provided by some embodiments of the present disclosure;
FIG. 2 is a schematic structural diagram of an energy storage system provided by some embodiments of the present disclosure;
FIG. 3 is a schematic structural diagram of an energy storage apparatus provided by some embodiments of the present disclosure;
FIG. 4 is a local schematic structural diagram of an energy storage apparatus in FIG. 3;
FIG. 5 is a layout diagram of an energy storage apparatus provided by some embodiments of the present disclosure;
FIG. 6 is a schematic structural diagram of an energy storage apparatus provided by some embodiments of the present disclosure;
FIG. 7 is a schematic structural diagram of an energy storage apparatus provided by some embodiments of the present disclosure;
FIG. 8 is a schematic structural diagram of an energy storage apparatus provided by some embodiments of the present disclosure;
FIG. 9 is a schematic structural diagram of an energy storage apparatus provided by some embodiments of the present disclosure;
FIG. 10 is a schematic structural diagram of an energy storage apparatus provided by some embodiments of the present disclosure;
FIG. 11 is a schematic structural diagram of an energy storage apparatus provided by some embodiments of the present disclosure;
FIG. 12 is a schematic structural diagram of an energy storage apparatus provided by some embodiments of the present disclosure;
FIG. 13 is a schematic structural diagram of an energy storage apparatus provided by some embodiments of the present disclosure;
FIG. 14 is a schematic structural diagram of a control module provided by some embodiments of the present disclosure;
FIG. 15 is a schematic structural diagram of matched two adjacent bins of an energy storage apparatus provided by some embodiments of the present disclosure;
FIG. 16 is a schematic structural diagram of an energy storage apparatus provided by some embodiments of the present disclosure;
FIG. 17 is a schematic structural diagram of an energy storage apparatus provided by some embodiments of the present disclosure;
FIG. 18 is a schematic structural diagram of a battery apparatus provided by some embodiments of the present disclosure;
FIG. 19 is a schematic structural diagram of an energy storage apparatus provided by some embodiments of the present disclosure;
FIG. 20 is a schematic structural diagram of an energy storage cabinet in FIG. 19;
FIG. 21 is a layout diagram of an energy storage apparatus provided by some embodiments of the present disclosure;
FIG. 22 is a schematic structural diagram of an energy storage apparatus provided by some embodiments of the present disclosure;
FIG. 23 is a schematic structural diagram of an energy storage cabinet in FIG. 22;
FIG. 24 is a layout diagram of an energy storage apparatus provided by some embodiments of the present disclosure.

### Reference numerals

1000, charging network; 2000, energy storage system; 100, energy storage apparatus; 100a, energy storage cabinet; 10, bin; 101, first separator; 102, second separator; 103, third separator; 104, first bin door; 105, fourth separator; 2, energy unit; 3, first bin; 31, first limiting member; 311, limiting slot; 4, second bin; 41, second limiting member; 411, limiting hole; 42, limiting pin; 43, supporting member; 6, first connector; 7, second connector; 8, third connector; 9, fourth connector; 11, energy bin; 12, control bin; 121, first bin body; 122, second bin body; 13, pipeline bin; 14, ventilation opening; 20, thermal management module; 30, control module; 301, main control module; 302, power distribution module; 303, general control module; 304, fire control module; 40, heat exchange pipeline; 50, connecting wire harness; 51, high-voltage wire harness; 52, low-voltage wire harness; 60, protective cover; 70, second bin door; 80, battery apparatus; 81, box; 811, first box body; 812; second box body; 82, thermal management part; 90, liquid cooling pipeline; 91, main pipeline; 92, branch pipeline; 200, charging pile; 300, power conversion apparatus; and 3000, power generation apparatus.

### DETAILED DESCRIPTION

Unless otherwise specified, all embodiments of the present disclosure and optional embodiments may be combined with each other to form a new technical solution.

Unless otherwise specified, all the technical features of the present disclosure and optional technical features may be combined with each other to form a new technical solution.

With the development of clean energy, electric energy is used as driving power in more and more devices, leading to the rapid development of power batteries that can store a large amount of electric energy and be subjected to multiple cycles of charging and discharging, such as lithiumion batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields.

In the embodiments of the present disclosure, energy units can be secondary batteries, which refer to energy units that active materials can be activated by charging for continuous used after discharging.

The energy unit may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like, which is not limited in the embodiments of the preset disclosure.

The energy unit generally includes an electrode assembly. Only as an example, an electrode assembly includes a positive electrode, a negative electrode, and a separator, and the separator is arranged between the negative electrode and the positive electrode. In the charging and discharging process of the energy unit, active ions (such as lithium ions) are intercalated and de-intercalated between the positive electrode and the negative electrode in a reciprocating manner. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in the thickness direction thereof, and the positive electrode active material is arranged on either or both of the two opposite surfaces of the positive electrode current collector.

As an example, a positive electrode current collector can be prepared from a metal foil, a conductive polymer material, or a carbon material or can be a composite current collector. For example, the positive electrode current collector is prepared from the metal foil, which can be a pure metal, an alloy, and a surface-treated metal, including but not limited to stainless steel, copper, aluminum, nickel, titanium or silver and the like. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, there is no limitation on the materials in the present disclosure, and other traditional materials that can be used as the positive electrode active materials of the battery can also be used.

In some embodiments, the negative electrode may be a negative electrode plate, and the negative electrode plate may include a negative electrode current collector.

As an example, a negative electrode current collector can be prepared from a metal foil, a conductive polymer material, or a carbon material or can be a composite current collector. For example, the positive electrode current collector is prepared from the metal foil, which can be a pure metal, an alloy and a surface-treated metal, including but not limited to stainless steel, copper, aluminum, nickel, titanium or silver and the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the negative electrode plate can include a negative electrode current collector and a negative electrode material layer arranged on at least one surface of the negative electrode current collector.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator film may be selected from at least one of glass fiber, non-woven fabric, polyethylene, polypropylene, polyvinylidene fluoride, and ceramic. The separator film can be either a single-layer thin film or a multi-layer composite thin film without special limitations. When the separator film is a multi-layer composite film, the materials of the layers can be the same or different, which is not particularly limited. The separator may be an independent component positioned between the positive electrode and the negative electrode, or may be attached to the surfaces of the positive electrode and the negative electrode. A surface of a separator can be coated with an inorganic particle coating, an organic particle coating, or an organic/inorganic composite coating.

In some embodiments, the spacer is a solid electrolyte. The solid electrolyte is arranged between the positive electrode and the negative electrode and plays a role in transmitting ions and isolating the positive electrode and the negative electrode.

In some embodiments, the energy unit further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

The electrode assembly can be of a winding structure, a stacking structure, or a hybrid structure of winding and stacking.

In some embodiments, the electrode assembly is of a winding structure. The positive electrode plate and the negative electrode plate are wound into the wound structure.

In some implementations, the electrode assembly is of a laminated structure.

As an example, a plurality of positive plates and a plurality of negative plates may be provided, and the plurality of positive plates and the plurality of negative plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of separators may be provided and arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some embodiments, the electrode assembly is provided with a tab, and the tab may lead current out of the electrode assembly. The tab includes a positive electrode tab and a negative electrode tab.

In some embodiments, the energy units can include shells. The shells can be steel shells, aluminum shells, plastic shells (such as polypropylene), composite metal shells (such as copperaluminum composite shells) or aluminum-plastic films and the like. In some embodiments, the shells can be of a sealed structure or a non-sealed structure. As an example, when the shell is a non-sealed structure, the shell can protect the electrode assembly. A sealing bag is also included between the shell and the electrode assembly, and the sealing bag is used to encapsulate the electrode assembly and the electrolyte. Specifically, a sealing bag can be a bag-shaped insulation member or an aluminum-plastic film. The shells of the sealed structure are used for packaging the electrode assembly, the electrolyte and the like.

As an example, the energy units can be cylindrical energy units, prismatic energy units, soft package energy units or energy units in other shapes; the prismatic energy units include a squareshell energy unit, a blade-shaped energy unit, and a polygon-prism battery; and the polygon-prism battery is a hexagonal battery and the like, which is not particularly limited in the present disclosure.

In some embodiments, the shells include end covers and shell bodies, the shell bodies are provided with openings, and the end covers cover the openings. The shell bodies can be provided with one or more openings. One or a plurality of end covers may also be provided.

In some embodiments, the shells are provided with at least one electrode terminal which is electrically connected to the tab. The electrode terminals can be directly connected to the tabs and can also be indirectly connected to the tabs through current collecting components. The electrode terminals can be arranged on the end covers or the shell bodies.

In some embodiments, the energy storage apparatus includes an energy storage container and the like.

The requirement of a power station for the area energy density of the energy storage apparatus is increasing, and in order to increase the electric quantity, the total weight of bins and parts in the bins will be correspondingly increased. The energy storage apparatus is transported to a destination from a production place by land and/or sea, there is a weight limit in transportation by land and sea generally, leading a conflict between the increased energy density and the weight of the energy storage apparatus.

In view of this, the embodiments of the present disclosure provide a new technical solution, which is suitable for the energy storage apparatus, an energy storage system and a charging network including the energy storage apparatus.

The energy storage can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users or electrical devices during peak electricity consumption periods. The energy storage system provided by the embodiment of the present disclosure can be any electrical power system needing the energy storage apparatus.

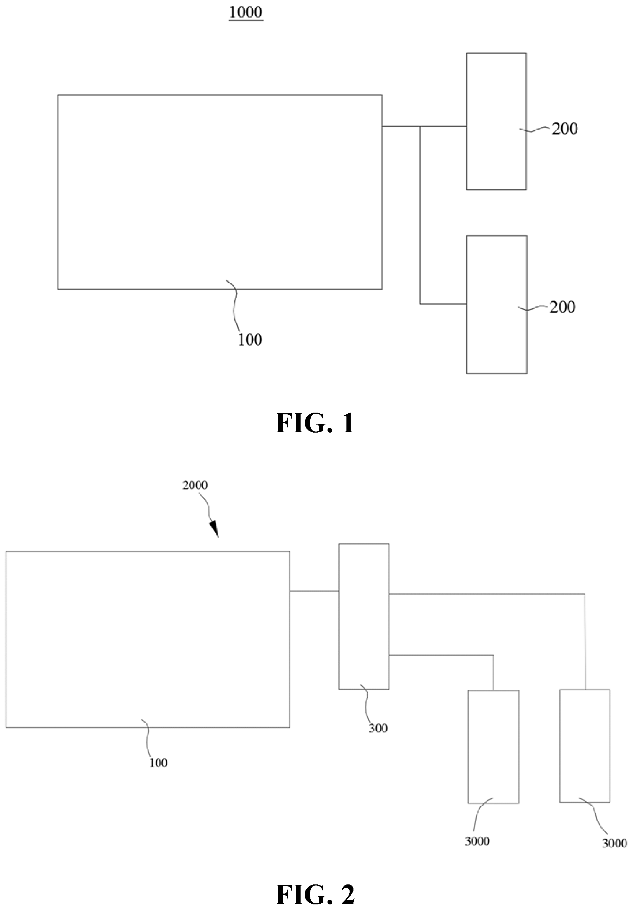

With reference to FIG. 1, FIG. 1 is a schematic structural diagram of a charging network 1000 provided by an embodiment of the present disclosure. The embodiment of the present disclosure provides the charging network 1000, and the charging network 1000 includes a charging pile 200 which is configured to charge an electrical device. The charging network 1000 can further include an energy storage apparatus 100 or an energy storage system 2000, and the energy storage apparatus 100 is electrically connected to the charging pile 200 and is configured to provide electric energy for the charging pile 200.

It is to be noted that the charging pile 200 is electrically connected to an energy unit 2 in the energy storage apparatus 100 through a cable, and the energy unit 2 can provide the stored electric energy for the charging pile 200. The charging pile 200 is provided with one or more connectors, and the connectors are connected to electrical device (such as a vehicle) so that energy can be supplemented to the electrical device. The charging network 1000 applies the energy storage apparatus 100, thus the reliability of the charging network 1000 can be effectively improved, and the deployment flexibility of the charging network 1000 can be improved.

The energy storage apparatus 100 can be located inside the charging pile 200 (such as a storage and charging all-in-one machine) or outside the charging pile 200.

In one charging network 1000, one charging pile 200 can be provided, and the energy storage apparatus 100 provides the electric energy for the one charging pile 200; and a plurality of charging piles 200 can be provided, and the energy storage apparatus 100 provides electric energy for the plurality of charging piles 200.

The energy storage apparatus 100 can include a plurality of bins 10 and a plurality of energy units 2, the plurality of energy units 2 are accommodated in at least one bin 10, and the energy units 2 are electrically connected to the charging pile 200 so as to provide electric energy for the charging pile 200.

As an example, as shown in FIG. 1, the charging network 1000 includes one energy storage apparatus 100 and two charging piles 200, and one energy storage apparatus 100 provides electric energy for the two charging piles 200.

With reference to FIG. 2, FIG. 2 is a schematic structural diagram of the energy storage system 2000 provided by an embodiment of the present disclosure. The embodiment of the present disclosure provides the energy storage system 2000. The energy storage system 2000 includes a power conversion apparatus 300, and the power conversion apparatus 300 can be electrically connected to power generation apparatuses 3000 and the energy storage apparatus 100 so as to convert electric power provided by the power generation apparatuses 3000. The power conversion apparatus 300 performs power conversion on the electric energy provided by the power generation apparatuses 3000 and then stores in the energy storage apparatus 100.

The power conversion apparatus 300 is connected between the power generation apparatuses 3000 and the energy storage apparatus 100. The power generation apparatuses 3000 are configured to generate the electric energy, and the power generation apparatuses 3000 are also configured to store the generated electric energy in the energy storage apparatus 100 through the power conversion apparatus 300. The energy storage system 2000 applies the energy storage apparatus 100, and thus the operation reliability of the energy storage system 2000 can be effectively improved. In specific implementation, the power generation device can be particularly a solar panel, a hydroelectric power generation device, a thermal power generation device and the like. The specific type of the power generation device is not limited in the present disclosure.

As an example, as shown in FIG. 2, the energy storage system 2000 includes the energy storage apparatus 100 and the power conversion apparatus 300, the two power generation apparatuses 3000 transmit the generated electric energy to the power conversion apparatus 300, and the power conversion apparatus 300 stores the electric energy in the energy storage apparatus 100.

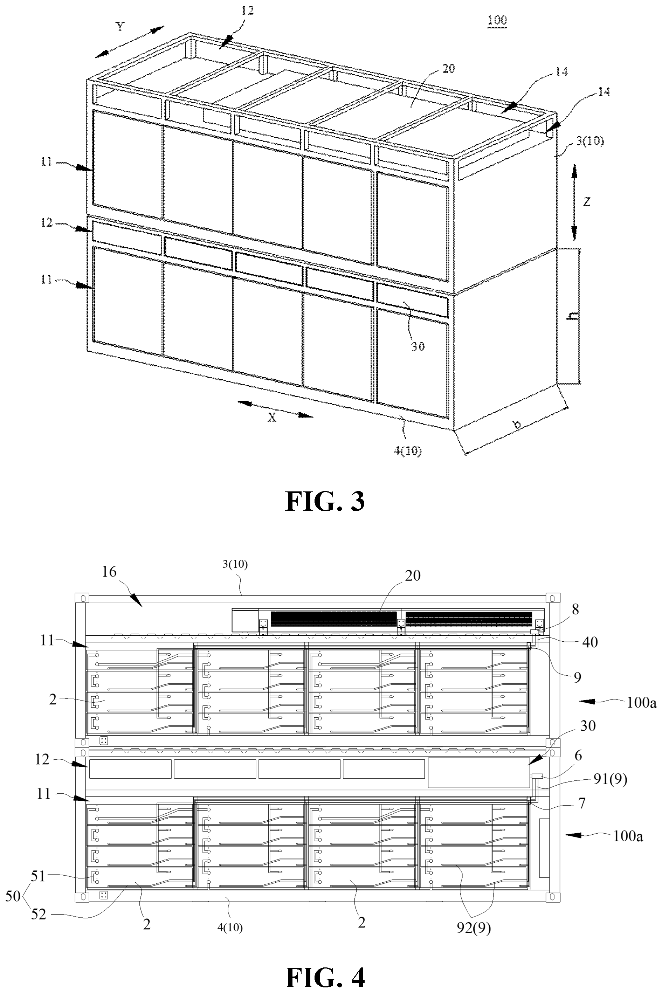

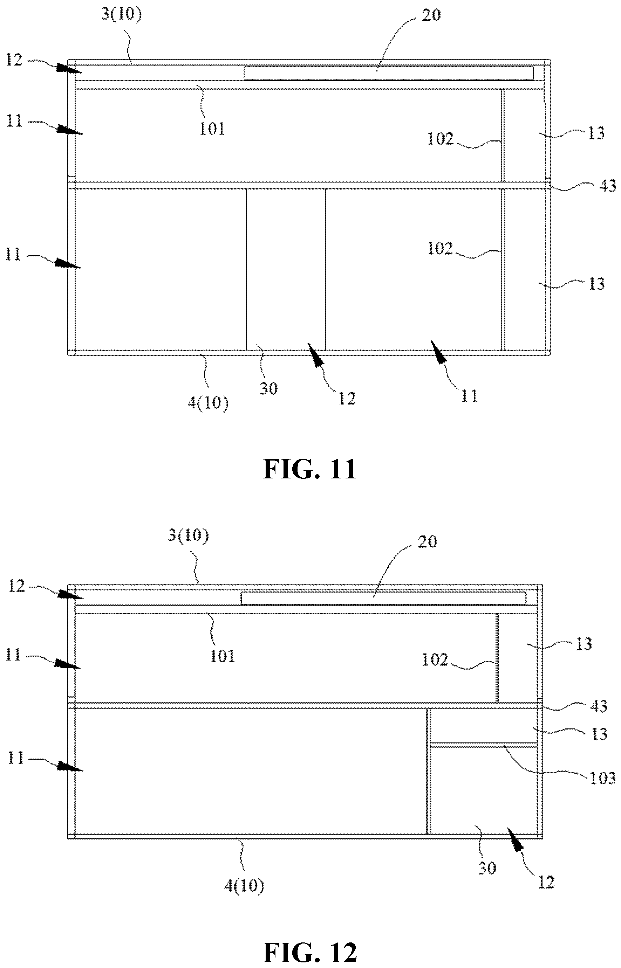

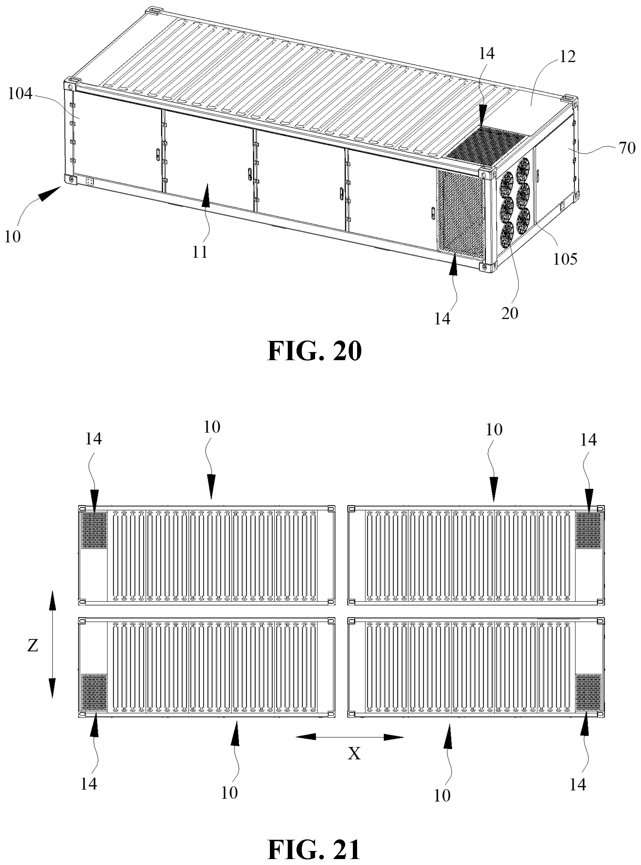

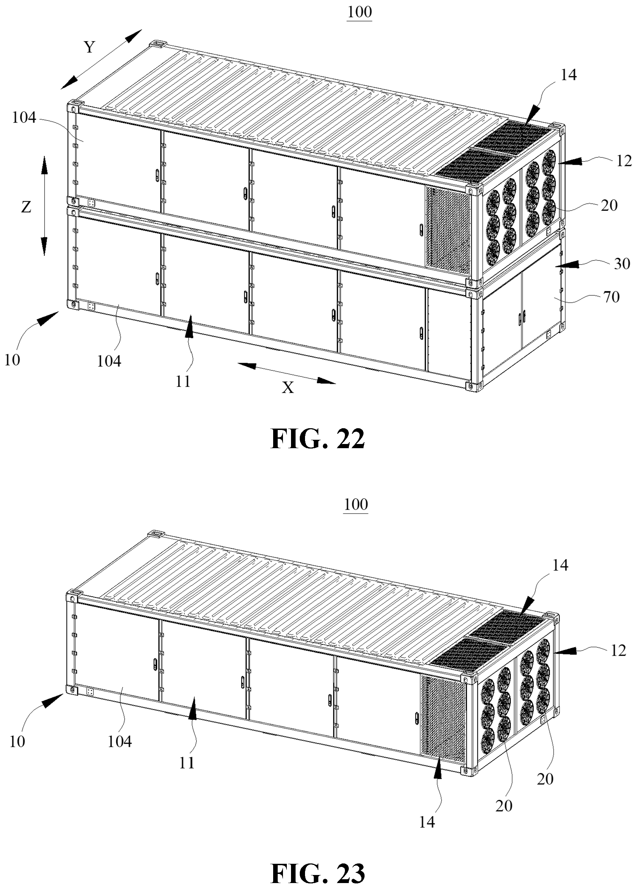

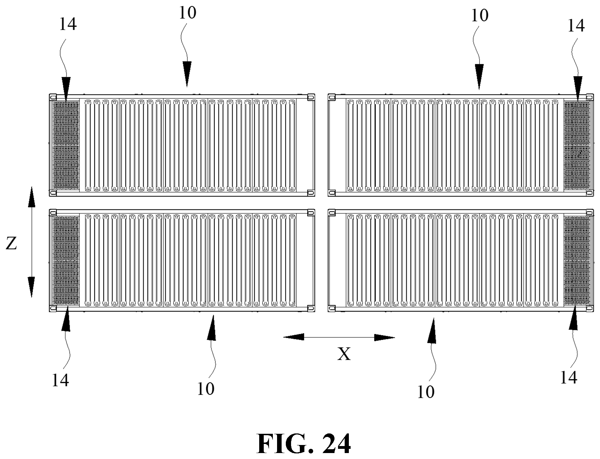

With reference to FIG. 3 to FIG. 13, and FIG. 19 to FIG. 24, some embodiments of the present disclosure provide the energy storage apparatus 100, the energy storage apparatus 100 includes a plurality of bins 10 which are arranged in a first direction.

The bins 10 can be cabinets or containers, cavities are formed in the bins 10, and other components of the energy storage apparatus 100 can be accommodated in the cavities. The bins 10 can be of a hexahedron structure.

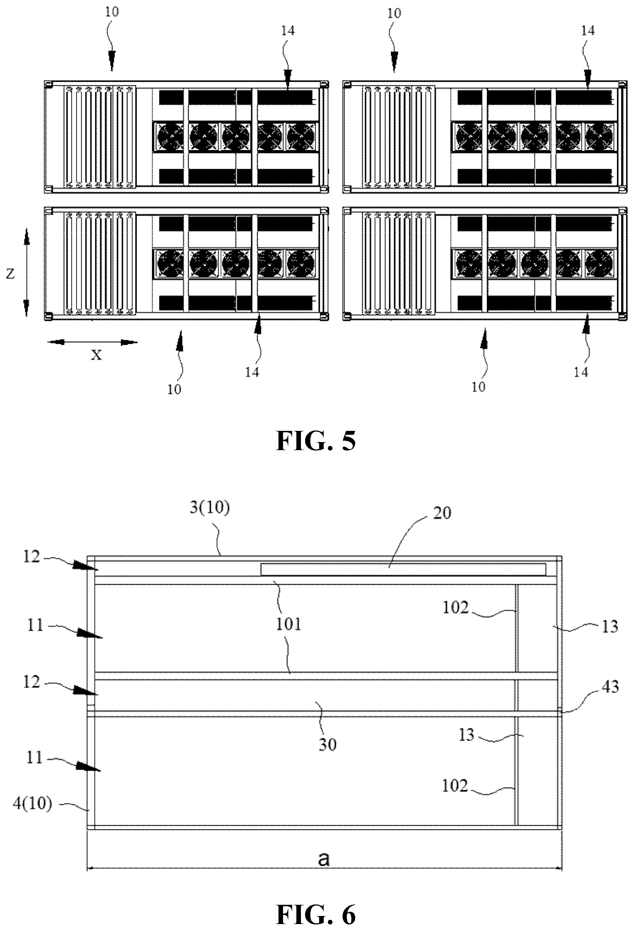

The bins 10 are generally of a cuboid structure, the length direction and the width direction of the bins 10 are both parallel to a horizontal plane, and the length direction of the bins 10 is parallel to the longest edge of the cuboid structure of the bins 10. The height direction of the bins 10 is perpendicular to the ground. By way of example, as shown in FIG. 3 and FIG. 5, the length direction of the bins 10 is represented by X, the width direction of the bins 10 is represented by Y, and the height direction of the bins 10 is represented by Z.

The plurality of bins 10 are arranged in the first direction, and it is to be understood that the plurality of bins 10 are stacked or connected in the first direction.

By way of example, the first direction is the length direction, width direction or height direction of the bins 10. In the embodiments of the present disclosure, the first height direction being the height direction is taken as an example.

With reference to FIG. 3 and FIG. 6, there may be more than two bins 10 in the energy storage apparatus 100, for example, the energy storage apparatus 100 includes two bins 10 which are stacked in the height direction; and for another example, the energy storage apparatus 100 includes three bins 10 which are stacked in the height direction. By way of example, the sum of the heights of all the bins 10 stacked in the height direction is less than or equal to the sum of the heights of eight stacked standard containers.

The energy storage apparatus 100 further includes a plurality of energy units 2 which are configured to provide or store the electric energy.

The energy units 2 can be battery cells or a battery apparatus 80 formed by electrically connecting a plurality of battery cells.

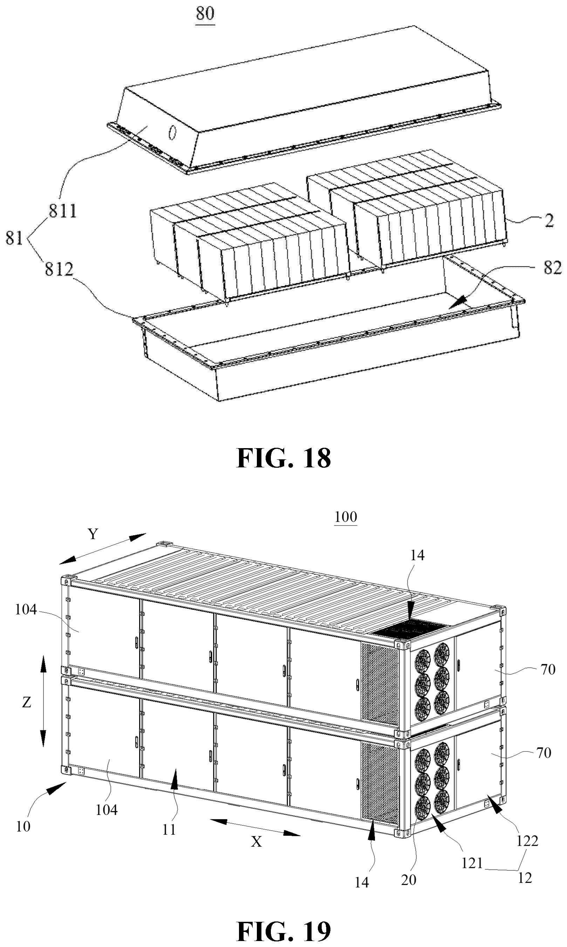

With reference to FIG. 18, the plurality of energy units 2 can form multi-layer and/or multirow battery apparatuses 80, and each row or each row of battery apparatuses 80 includes a plurality of battery apparatuses 80.

The battery apparatus 80 in the embodiments of the present disclosure can include one or more battery cell assemblies for providing voltage and capacity. The battery cell assembly can include the plurality of battery cells, and the plurality of battery cells are connected in series or in parallel or in a series-parallel mode through a busbar component.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by binding a plurality of battery cells with a binding tape.

In some embodiments, the battery apparatus 80 can be a battery pack, and the battery pack includes a box 81 and one or more battery cell assemblies accommodated in the box 81.

As an example, the battery cell assemblies can be battery modules and can be accommodated in the box 81 by a mode of fixing the battery modules into the box 81.

By way of example, the battery cell assemblies can also be accommodated in the box 81 by a mode of directly fixing the battery cells into the box 81.

By way of example, with reference to FIG. 18, the box 81 can include a first box body 811 and a second box body 812. The first box body 811 and the second box body 812 are buckled so that an enclosure space is formed in the box 81 to accommodate the battery cell assemblies. The enclosure refers to covered or closed, and can be sealed or non-sealed. The first box body 811 can be a top cover or a bottom plate.

By way of example, the box 81 can include the top cover, a frame, and the bottom plate. The top cover and the bottom plate are respectively connected to the frame so that the enclosure space is formed in the box 81 to accommodate the battery cell assemblies.

By way of example, the plurality of energy units 2 are accommodated in at least one bin 10.

That is, some of the bins 10 accommodate the energy units 2, while other bins 10 do not accommodate the energy units 2; or all the bins 10 accommodate the energy units 2.

In the embodiments that some of the bins 10 accommodate the energy units 2, one or more of the bins 10 accommodate the energy units 2.

The plurality of energy units 2 are accommodated in the bins 10, and can be the battery modules or battery packs.

In some embodiments, with reference to FIG. 4, the energy storage apparatus 100 includes a control module 30 which is configured to perform electrical control on the plurality of energy units 2 of the energy storage apparatus 100.

In the embodiments, the control module 30 is arranged and can control the electric energy input or output of the energy units 2 to realize electrical control on the energy units 2.

By way of example, the size of at least one of the plurality of bins 10 in the first direction is less than the size of one standard container in the first direction.

The sizes of some of the bins 10 in the first direction are less than the size of one standard container in the first direction, or, the sizes of all the bins 10 in the first direction are less than the size of one standard container in the first direction.

With reference to FIG. 3 and FIG. 6, the sizes a of the bins 10 in the length direction are the distance between both ends of the bins 10 in the length direction; the sizes b of the bins 10 in the width direction are the distance between both ends of the bins 10 in the width direction; and the sizes h of the bins 10 in the height direction are the distance between both ends of the bins 10 in the height direction. The sizes a, the sizes b, and the sizes h are the maximum sizes of outer contours of the bins 10 in the corresponding directions. The bins 10 can include eight corner fittings and six box walls, the eight corner fittings are located at eight corners of the cuboid structure of the bins 10 and protrude out of the box walls of the bins 10, the total span of two corner fittings arranged in the height direction is equal to the heights of the bins 10, the total span of two corner fittings arranged in the length direction is equal to the lengths of the bins 10, and the total span of two corner fittings arranged in the width direction is equal to the widths of the bins 10. When calculating the sizes of the bins 10, pipelines and cables which are connected to the bin 10 and located outside the bin 10 cannot be calculated as the sizes of the bins 10.

The standard containers can be the sizes of the standard containers in transportation, such as 10 chi, 20 chi, 30 chi, 40 chi or 45 chi, which meets the corresponding standard; and the length, width, and height of the standard containers have the corresponding values. The standard containers can refer to GB/T1413-2023 Series 1 Freight containers-Classification, Dimensions and Ratings.

The 10 chi can include: size of 2,991 mm in the length direction, with the tolerance of 0-5 mm; size of 2.438 mm in the width direction, with the tolerance of 0-5 mm; size of 2,438 mm or less than 2,438 mm in the height direction; and the tolerance of 0-5 mm.

The 20 chi can include: size of 6,058 mm in the length direction, with the tolerance of 0-6 mm; size of 2,438 mm in the width direction, with the tolerance of 0-5 mm; size of 2,896 mm, 2,591 mm or not greater than 2,438 mm in the height direction; and the tolerance of 0-5 mm.

The 30 chi can include: size of 9125 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 40 chi can include: size of 12192 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 45 chi can include: size of 13,716 mm in the length direction, with the tolerance of 0-10 mm; size of 2,438 mm in the width direction, with the tolerance of 350-5 mm; size of 2,591 mm or 2,896 mm in the height direction; and the tolerance of 0-5 mm.

In the embodiments of the present disclosure, for the bins 10 of various sizes, the size ±1%, ±2%, ±3%, ±4%, and ±5% can be regarded as the sizes within the tolerance range.

The sizes of the bins 10 in the first direction are set to be less than the size of one standard container in the first direction; by reducing the sizes of the bins 10, the manufacturing cost of the energy storage apparatus 100 can be reduced, and moreover, the total weight of the bins 10 that accommodate the energy units 2 and the like can be reduced, which is conducive to relieving the problem of overweight in transportation, and reducing the transportation cost of the energy storage apparatus 100.

By way of example, the size of each bin 10 in the first direction is less than the size of one standard container in the first direction.

Therefore, the manufacturing cost of the energy storage apparatus 100 is further reduced, and accordingly, the transportation cost of the energy storage apparatus 100 is reduced.

By way of example, the sum of the sizes of the plurality of bins 10 in the first direction is set to be less than the sum of the sizes of one or more standard containers in the first direction.

That is, during the transportation process, the plurality of bins 10 can occupy the space of one or more standard containers; that "the plurality of bins 10 can occupy the space of one or more standard containers" does not means that the size of the plurality of bins 10 is equal to the space of one or more standard containers, but rather than the plurality of bins 10 can be placed in the space occupied by one or more standard containers, and therefore, the transportation cost of the energy storage apparatus 100 is further reduced.

By way of example, the sum of the sizes of two bins 10 in the first direction is less than the sum of the size of one standard container in the first direction, that is, the two bins 10 can occupy the space of one standard container.

By way of example, the sum of the sizes of three bins 10 in the first direction is less than the sum of the size of one standard container in the first direction, that is, the two bins 10 can occupy the space of one standard container.

By way of example, the sum of the sizes of three bins 10 in the first direction is less than the sum of the sizes of two standard containers in the first direction, that is, the three bins 10 can occupy the spaces of two standard containers.

According to the energy storage apparatus 100 provided by the embodiment of the present disclosure, by reducing the sizes of the bins 10, the manufacturing cost of the energy storage apparatus 100 is reduced, and moreover, the total weight of the bins 10 and the parts in the bins 10 can be reduced, which is conducive to relieving the problem of overweight in transportation, and reducing the transportation cost of the energy storage apparatus 100, thereby reducing the use cost of the energy storage apparatus 100. The sum of the sizes of the plurality of bins 10 in the first direction is set to be less than the sum of the sizes of one or more standard containers in the first direction, that is, the plurality of bins 10 can occupy the spaces of one or more standard containers, which is conducive to further reducing the transportation cost of the energy storage apparatus 100.

In some embodiments, m bins 10 are provided, the sum of the sizes of m1 bins 10 in the m bins 10 in the first direction is less than the sum of the sizes of n standard containers in the first direction, m is greater than or equal to m1, m1 is greater than or equal to 2, and m1 is greater than n.

The m1 bins 10 in the m bins 10 refer to any m1 bins 10 in the m bins 10. For example, the energy storage apparatus 100 is provided with the three bins 10 which are the first bin 3, the second bin 4; and the third bin 10, and if m1 is 2, the two bins 10 can be the first bin 3 and the third bin 10, or the first bin 3 and the second bin 4, or the second bin 4 and the third bin 10.

The m1 can be less than m, and the sum of the sizes of the m1 bins 10 in the m bins 10 in the first direction is less than the sum of the sizes of the n standard containers in the first direction. For example, m is 8, m1 is 5, and n is 3; and the five bins 10 can be any five bins 10 in the eight bins 10.

The m1 can also be equal to the m, and the sum of the sizes of the m1 bins 10 in the m bins 10 in the first direction is less than the sum of the sizes of the n standard containers in the first direction. For example, m is 2, and the sum of the heights of the two bins 10 is less than the height of one standard container.

In the embodiments, the sum of the sizes of the m1 bins 10 in the first direction is less than the sum of the sizes of the n standard containers in the first direction, and m1 is greater than n, that is, the m1 bins 10 can occupy the spaces of the n standard containers, which is conducive to further reducing the transportation cost of the energy storage apparatus 100. In addition, by reducing the sizes of the bins 10, the manufacturing cost of the energy storage apparatus 100 can be reduced, and moreover, the total weight of the bins 10 and the parts in the bins 10 can be reduced, which is conducive to relieving the problem of overweight in transportation, and reducing the transportation cost of the energy storage apparatus 100, and thereby reducing the use cost of the energy storage apparatus 100.

In some embodiments, the first direction is the height direction of the bins 10, the standard containers are 20-foot standard containers, and the heights of the standard containers are 2,896 mm, 2,591 mm or 2,438 mm.

The sum of the sizes of the m1 bins 10 in the height direction is less than the height of n 20-foot standard containers, the heights of the standard containers are 2,896 mm, 2,591 mm or 2,438 mm, and m1 is greater than n.

It is to be understood that m, m1, and n are all positive integers.

In some embodiments, m1=2, and n=1.

It can be that the energy storage apparatus 100 includes more than two bins 10, for example, there are 3, 5, or 8 bins 10 in the energy storage apparatus 100. It can also be that the energy storage apparatus 100 only includes two bins 10.

The height of at least one bin 10 is set to be less than that of one standard container, the sum of the heights of two stacked bins 10 is less than the height of one standard container, and by reducing the sizes of the bins 10, the manufacturing cost of the energy storage apparatus 100 is reduced, and moreover, the total weight of the bins 10 that accommodate the energy units 2 and other parts can be reduced, which is conducive to relieving the problem of overweight in transportation, and reducing the transportation cost of the energy storage apparatus 100. On the other hand, the sum of the sizes of the two bins 10 in the first direction is set to be less than the sum of the size of one standard container in the first direction, that is, the two bins 10 can occupy the space of one standard container, which is conducive to further reducing the transportation cost of the energy storage apparatus 100.

In some embodiments, m1=3, and n=1.

The height of at least one bin 10 is set to be less than that of one standard container, the sum of the heights of three stacked bins 10 is less than the height of one standard container, and by reducing the size of the at least one bin 10, the manufacturing cost of the energy storage apparatus 100 can be reduced, and moreover, the total weight of the bins 10 that accommodate with the energy units 2 and other parts can be reduced, which is conducive to relieving the problem of overweight in transportation, and reducing the transportation cost of the energy storage apparatus 100. On the other hand, the sum of the sizes of the three bins 10 in the first direction is set to be less than the sum of the size of one standard container in the first direction, that is, the three bins 10 can occupy the space of one standard container, which is conducive to further reducing the transportation cost of the energy storage apparatus 100.

In some embodiments, m1=3, and n=2.

The height of at least one bin 10 is set to be less than that of two standard containers, the sum of the heights of three stacked bins 10 is less than the height of two standard containers, and by reducing the size of the at least one bin 10, the manufacturing cost of the energy storage apparatus 100 can be reduced, and moreover, the total weight of the bins 10 that accommodate with the energy units 2 and other parts can be reduced, which is conducive to relieving the problem of overweight in transportation, and reducing the transportation cost of the energy storage apparatus 100. On the other hand, the sum of the sizes of the three bins 10 in the first direction is set to be less than the sum of the sizes of two standard containers in the first direction, that is, the three bins 10 can occupy the spaces of two standard containers, which is conducive to further reducing the transportation cost of the energy storage apparatus 100.

The m bins 10 can have the same or different sizes in the height direction.

In some embodiments, with reference to FIG. 6 to FIG. 13, the energy storage apparatus 100 further includes connecting mechanisms (not shown in the figure), and the connecting mechanisms are configured to connect every two adjacent bins 10 in the height direction. The connecting mechanisms include supporting members 43 which are arranged between every two adjacent bins 10 in the height direction; and the sum total of the sum of the sizes of the m1 bins 10 of the m bins 10 in the height direction and the sum of the sizes of m1-1 supporting members 43 in the height direction is less than the sum of the sizes of the n standard containers in the height direction.

Optionally, the bins 10 assembled for transportation in the height direction are connected and fixed through the supporting members 43, that is, when the supporting members 43 are arranged, the sizes of some of the m1 bins 10 in the height direction can be the sum of the heights of the bins 10 and the heights of the connected supporting members 43. It is because that the supporting members 43 connected to the bins 10 in the height direction occupy the heights of the bins 10 to a certain extent.

By way of example, when the m1 bins 10 are assembled and fixed for transportation through the supporting members 43, the sum total of the sum of the sizes of the m1 bins 10 in the height direction and the sum of the sizes of the m1-1 supporting members 43 in the height direction is less than the sum of the sizes of the n standard containers in the height direction. Optionally, there may be less than m1-1 supporting members 43 between the m1 bins 10, therefore, the total height of the stacked bins 10 includes the sum of the sizes of the m1 bins 10 and the sum of the sizes of the actual supporting members 43.

The bins 10 are connected through the connecting mechanisms, so that the bins 10 can be stably stacked. When transporting the bins 10, the sum total of the sum of the sizes of the m1 bins 10 in the height direction and the sum of the sizes of the supporting members 43 between every two adjacent bins 10 in the m1 bins 10 in the height direction is less than the sum of the heights of the n standard containers, which is conducive to reducing the use cost of the energy storage apparatus 100.

According to the energy storage apparatus 100 provided by the embodiment of the present disclosure, when the supporting members 43 are used during transportation, and under the condition that the supporting members 43 are not needed between the bins 10 that form the energy storage apparatus 100, that "the sum of the sizes of the m1 bins 10 in the height direction is less than the sum of the sizes of the n standard containers in the height direction" is to be understood as including the heights of the used supporting members 43. That is, the sum of the sizes of the m1 bins 10 in the height direction is less than the sum of the sizes of the n standard containers in the height direction minus the sum of the heights of the used supporting members 43. This case is also within the scope of the embodiment of the present disclosure.

In some embodiments, with reference to FIG. 3 to FIG. 13, the first direction is the height direction of the bins 10, the sizes of the bins 10 in the length direction are consistent with the sizes of the standard containers in the length direction, and the sizes of the bins 10 in the width direction are consistent with the sizes of the standard containers in the width direction.

In the embodiments, the sizes of the bins 10 in the length direction are set to be consistent with the sizes of the standard containers in the length direction, the sizes of the bins 10 in the width direction are set to be consistent with the sizes of the standard containers in the width direction, which is conducive to matching with transportation tools and lifting appliances of existing standard containers, and reducing the transportation cost of the energy storage apparatus 100, thereby reducing the use cost of the energy storage apparatus 100.

The sizes of the bins 10 in the height direction are set to be less than the size of one standard container in the height direction, the bins 10 do not exceed the heights of the corresponding standard containers transported by sea or land in the height direction of the bins 10 during the transportation process, which is conducive to facilitating the transportation of the bins 10, and reducing the transportation cost. The sizes of the bins 10 in the length direction and the sizes of the bins 10 in the width direction are consistent with those of the standard containers, so that the horizontal area occupied by the bins 10 during transportation is consistent with that of the standard containers, which is conducive to matching with the transportation tools and lifting appliances of existing standard containers, and reducing the transportation cost of the energy storage apparatus 100, thereby reducing the use cost of the energy storage apparatus 100.

In some embodiments, the energy storage apparatus 100 includes an energy storage cabinet 100a, the energy storage cabinet 100a includes the bins 10 and the parts arranged in the bins 10, the weight of the energy storage cabinet 100a is M, and M is less than or equal to 35 tons.

The parts arranged in the bins 10 are the energy units 2, connecting pipelines, the control module 30 or thermal management module 20 and the like.

The energy storage cabinet 100a refers to a cabinet body that can be independently transported and hoisted.

By way of example, the weight of the energy storage cabinet 100a can be a point value of any one or a point value between any two of 10 tons, 15 tons, 20 tons, 25 tons, 30 tons, or 35 tons.

During hoisting the energy storage cabinet 100a, it helps hoisting of a related hoisting apparatus, facilitating the transfer of the energy storage cabinet 100a.

In order for a single energy storage cabinet 100a to meet the requirements for the transportation limits in some countries, the overall weight of the energy storage cabinet 100a is controlled to be within 35 tons, the integration degree of the energy storage cabinet 100a is as high as possible, thus reducing the workload of mounting on site; and moreover, the energy per the unit area is improved, and the cost input of customers is reduced.

In the embodiments, the sum of the sizes of the m1 bins 10 in the first direction is set to be less than the sum of the sizes of the n standard containers in the first direction, the weight of the energy storage cabinet 100a is controlled to be within 35 tons, thus the energy storage cabinet 100a can be normally transported and hoisted in a plurality of transportation scenes such as transporting by land or sea, and the problems that the energy storage cabinet 100a is overweight and exceeds the bearing limit of roads, bridges, lifting appliances and the like during transportation, is needed to be disassembled for transportation or transferred by a special device, leading to an increase in transportation cost can be solved to a certain degree. In addition, the bins 10 do exceed the heights of the corresponding standard containers for transportation by land or sea during transportation in the height direction of the bins 10, which facilitates transportation of the bins 10, thereby further reducing the transportation cost.

In some embodiments, with reference to FIG. 4, the energy storage apparatus 100 includes the thermal management module 20 which is configured to manage the temperatures of the plurality of energy units 2 in the energy storage apparatus 100.

In the embodiments, the thermal management module 20 is arranged and can manage the temperatures of the energy units 2, so that the risk of the temperature runaway of the energy units 2 is reduced.

In some embodiments, with reference to FIG. 4, m bins 10 are provided, the plurality of energy units 2 are accommodated in the m bins 10, and the thermal management module 20 is configured to manage the temperatures of the plurality of energy units 2 in the m bins 10.

That is, the energy storage apparatus 100 shares the thermal management module 20 to form a complete system, which is beneficial to saving space.

In some embodiments, with reference to FIG. 4, the m bins 10 are provided, the plurality of energy units 2 are accommodated in the m bins 10, and the control module 30 is configured to perform electrical control on the plurality of energy units 2 in the m bins 10.

That is, the energy storage apparatus 100 shares the control module 30 to form a complete system, which is beneficial to saving space.

In some embodiments, with reference to FIG. 4, the control module 30 is accommodated in at least one bin 10.

Some of the bins 10 or all the bins 10 accommodate the control module 30.

In the embodiments that some of the bins 10 accommodate the control module 30, for the bins 10 without the control module 30, electrical control is performed on the energy units 2 through the control module 30 in the other bins 10. By way of example, the energy storage apparatus 100 includes two bins 10, namely the first bin 3 and the second bin 4, in which, the first bin 3 accommodates the control module 30, the second bin 4 accommodates the energy units 2, and the control module 30 in the first bin 3 can perform electrical control on the energy units 2 in the second bin 4.

When all the bins 10 accommodate the control module 30, and the plurality of energy units 2 are arranged in the first bin 3 and the second bin 4, the control module 30 in all the bins 10 can act together to perform electrical control on the plurality of energy units 2 in the first bin 3 and the second bin 4; or, the control module 30 in each bin 10 can also act independently, that is, the control module 30 in the first bin 3 performs electrical control on the plurality of energy units 2 in the first bin 3, and the control module 30 in the second bin 4 performs electrical control on the plurality of energy units 2 in the second bin 4.

In some embodiments, with reference to FIG. 4, the thermal management module 20 is accommodated in at least one bin 10.

The thermal management module 20 can be liquid cooling units, air conditioners, ground source cooling devices or sea liquid cooling devices.

Some of or all the bins 10 accommodate the thermal management module 20.

In the embodiments that some of the bins 10 accommodate the thermal management module 20, for the bins 10 without the thermal management module 20, the temperatures of the energy units 2 can be managed through the thermal management module 20 in the other bins 10. By way of example, the energy storage apparatus 100 includes two bins 10, namely the first bin 3 and the second bin 4, in which, the first bin 3 accommodates the thermal management module 20, the second bin 4 does not accommodate the thermal management module 20, and the thermal management module 20 in the first bin 3 can manage the temperatures of the energy units 2 in the first bin 3 and the second bin 4.

When all the bins 10 accommodate the thermal management module 20, and the plurality of energy units 2 are arranged in the first bin 3 and the second bin 4, the thermal management module 20 in all the bins 10 can act together to control the temperatures of the plurality of energy units 2 in the first bin 3 and the second bin 4; or, the thermal management module 20 in each bin 10 can act independently, that is, the thermal management module 20 in the first bin 3 controls the temperatures of the plurality of energy units 2 in the first bin 3, and the thermal management module 20 in the second bin 4 controls the temperatures of the plurality of energy units 2 in the second bin 4.

As an example, when the control module 30 and the thermal management module 20 in the first bin 3 and the second bin 4 can act independently, the first bin 3 and the parts inside can be regarded as an independent energy storage apparatus 100; and the second bin 4 and the parts inside can be regarded as an independent energy storage apparatus 100. An as example, when it needs the control module 30 and the thermal management module 20 in the first bin 3 and the second bin 4 to control the energy units 2 in the two bins 10 together, the first bin 3 and the parts inside, as well as the second bin 4 and the parts inside can be regarded as one energy storage apparatus 100 together. Definitely, only some of the energy units 2 can be operated, for example, only the energy units 2 in the first bin 3 are subjected to electrical control and temperature control, so that the energy units 2 in the first bin 3 input or output the electric energy, the energy units 2 in the second bin 4 do not output the electric energy, which can be determined according to actual use requirements.

Due to the sizes of the energy units 2, there is a situation that the energy units 2 cannot fully fill the bins 10; and by arranging the control module 30 and/or the thermal management module 20 in the bins 10, the spaces in the bins 10 can be fully utilized, thereby further improving the space utilization rate of the bins 10.

In addition, the control module 30 and/or the thermal management module 20 are integrated with the bins 10, and the pipelines and lines of the control module 30 and/or the thermal management module 20 are connected during shipment, so that the workload of mounting the pipelines and the lines during mounting the control module 30 and/or the thermal management module 20 on site is reduced, and the mounting cost is reduced.

Definitely, in other embodiments, the control module 30 and/or the thermal management module 20 can also be arranged outside the bins 10.

By way of example, at least part of the control module 30 is arranged outside the bins 10.

That is, part of the control module 30 is arranged outside the bins 10, while the other part of the control module 30 is arranged in the bins 10; or all the control module 30 is arranged outside the bins 10.

At least part of the control module 30 is arranged outside the bins 10, so that the influence of the control module 30 on the energy units 2 can be reduced to a certain extent, and moreover, the control module 30 does not occupy the spaces in the bins 10. In addition, the control module 30 is convenient to maintain and replace.

The control module 30 arranged outside the bins 10 can be connected to at least one bin 10, or, the control module 30 arranged outside the bins 10 are separated from the bins 10, and the control module 30 and the bins 10 are connected through the connecting lines or connecting pipelines.

By way of example, at least some of the thermal management module 20 is arranged outside the bins 10.

That is, part of the thermal management module 20 is arranged outside the bins 10, while the other part of the thermal management module 20 is arranged in the bins 10; or all the thermal management module 20 is arranged outside the bins 10.

At least some of the thermal management module 20 is arranged outside the bins 10, so that the influence of the thermal management module 20 on the energy units 2 can be reduced to a certain extent, and the thermal management module 20 does not occupy the spaces in the bins 10. In addition, the thermal management module 20 is convenient to maintain and replace.

The thermal management module 20 arranged outside the bins 10 can be connected to at least one bin 10, or, the thermal management module 20 arranged outside the bins 10 are separated from the bins 10, and the thermal management module 20 and the bins 10 are connected through the connecting lines or connecting pipelines.

Definitely, part of the structures of the thermal management module 20 can be arranged outside the bins 10, while the other part is arranged in the bins 10.

By way of example, the thermal management module 20 includes cooling fans which are arranged outside the bins 10. For example, the thermal management module 20 includes cooling fans and heat exchangers which are arranged outside the bins 10.

Therefore, it facilitates heat exchange of the cooling fans and the heat exchangers to the outside, thereby improving the heat exchange efficiency.

In some embodiments, the energy storage apparatus 100 can also not include the thermal management module 20.

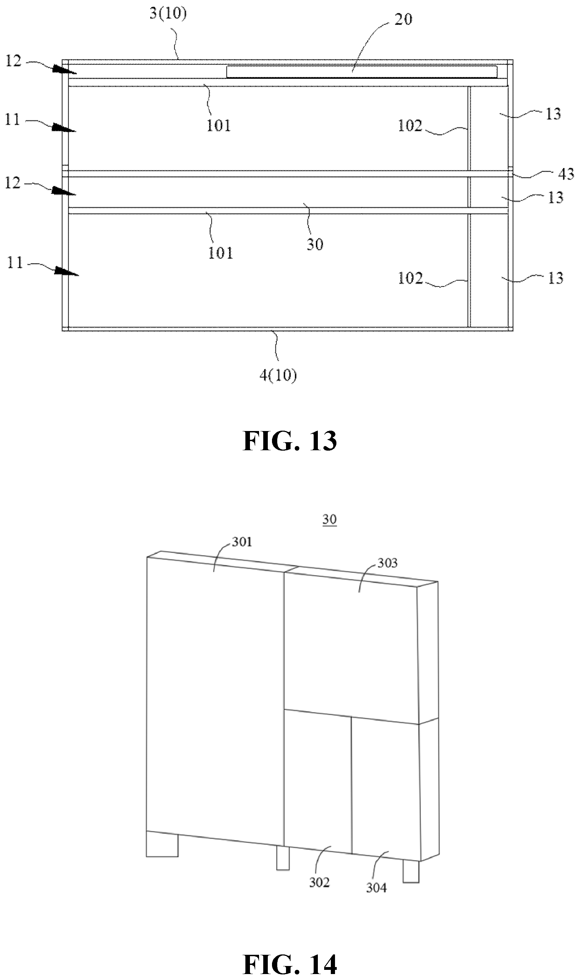

In some embodiments, with reference to FIG. 14, the control module 30 includes at least one of a main control module 301, a power distribution module 302, a general control module 303, and a fire control module 304.

The energy unit 2 is electrically connected to the main control module 301. The main control module 301 is electrically connected to the general control module 303. The main control module 301, the general control module 303, and the fire control module 304 are all electrically connected to the power distribution module 302.

The main control module 301 is configured to control the input and output of high-voltage electric energy of the energy units 2 in the bins 10. The general control module 303 is configured to control the on-off action of the main control module 301 in the bins 10.

The fire control module 304 is configured to control fire elements to act when a fire occurs due to temperature imbalance in the bins 10; and the fire elements can be fire extinguishers and the like and can be arranged in the bins 10.

The power distribution module 302 is configured to electrically connect the main control module 301, the general control module 303, and the fire control module 304, so as to facilitate the connection of circuits of the main control module 301, the general control module 303, and the fire control module 304 as well as the normal operation of the main control module 301, the general control module 303, and the fire control module 304.

In the embodiments that the energy storage apparatus 100 includes a plurality of control modules 30, the plurality of control modules 30 can be the same or different.

By way of example, each bin 10 is provided with the control module 30, that is, the control modules 30 are in one-to-one correspondence with the bins 10, and one control module 30 correspondingly controls the input and output of the electric energy of the energy units 2 in one bin 10, therefore, the control module 30 can conveniently perform electrical control on the energy units 2.

By way of example, with reference to FIG. 6 to FIG. 13, some of the bins 10 are provided with the control module 30, while the others are not provided with the control module 30, that is, one control module 30 correspondingly controls the input or output of the electric energy of the energy units 2 in the plurality of bins 10. For example, when there are two bins 10, one bin 10 is provided with the control module 30, while the other one is not provided with the control module 30, and the control module 30 correspondingly controls the input or output of the electric energy of the energy units 2 in the two bins 10.

Definitely, there can also be a plurality of control modules 30 in one bin 10, the plurality of energy units 2 are in one bin 10 and are connected in series to form a battery cluster, a plurality of battery clusters are connected in parallel, and one control module 30 can correspondingly control one or more battery clusters.

The thermal management module 20 includes heat exchange units, for example, liquid cooling units, with reference to FIG. 4, the thermal management module 20 performs heat exchange on the energy units 2 through heat exchange pipelines 40 (for example, liquid cooling pipelines 90), thereby realizing temperature management on the energy units 2 and reducing the risk of temperature runaway of the energy units 2.

By way of example, each bin 10 is provided with the thermal management module 20, that is, the thermal management modules 20 are in one-to-one correspondence with the bins 10, and one thermal management module 20 correspondingly manages the temperature of the energy units 2 in one bin 10.

By way of example, with reference to FIG. 6 to FIG. 13, and FIG. 22, some of the bins 10 are provided with the thermal management module 20, and while the others are not provided with the thermal management module 20, that is, one thermal management module 20 correspondingly manages the temperature of the energy units 2 in the plurality of bins 10. For example, when there are two bins 10, one bin 10 is internally provided with the thermal management module 20, the other bin 10 is not provided with the thermal management module 20, and the thermal management module 20 performs heat exchange on the energy units 2 in the two bins 10 through the heat exchange pipelines 40 (for example, the liquid cooling pipelines 90), that is, the thermal management module 20 can correspondingly manage the temperature of the energy units 2 in the two bins 10.

In some embodiments, the sizes of the bins 10 that accommodate the thermal management module 20 in the first direction is greater than that of other bins 10 in the first direction.

Therefore, the spaces in the bins 10 which accommodate the thermal management module 20 can be increased, and the influence of the thermal management module 20 on the volume for accommodating the energy units 2 can be reduced, that is, the bins 10 have enough space to accommodate the energy units 2 and the thermal management module 20. In addition, the thermal management module 20 with higher refrigerating capacity can be placed to improve the thermal management capacity.

With reference to FIG. 4, the embodiment of the present disclosure provides the energy storage apparatus 100 which includes the bins 10 and the energy units 2, and a plurality of energy units 2 are provided and are accommodated in the bins 10.

By way of example, the bins 10 can be configured to accommodate at least one of the control module 30 and the thermal management module 20.

In some embodiments, with reference to FIG. 3 to FIG. 13, at least some of the bins 10 are internally provided with energy bins 11 and control bins 12. The energy bins 11 are configured to accommodate at least one energy unit 2, and at least part of the control module 30 and/or at least some of the thermal management module 20 are accommodated in the control bins 12.

At least part of the control module 30 and/or at least some of the thermal management module 20 is accommodated in the control bins 12, namely, at least part of the control module 30 is accommodated in the control bins 12, or at least some of the thermal management module 20 is accommodated in the control bins 12, or at least part of the control module 30 and at least some of the thermal management module 20 is accommodated in the control bins 12.

By way of example, part of the control module 30 and/or part of the thermal management module 20 is accommodated in the control bins 12 in the bins 10, and while the other part of the control module 30 and/or other part of the thermal management module 20 are arranged outside the bins 10; or all the control module 30 and/or all the thermal management module 20 are accommodated in the control bins 12 in the bins 10.

By way of example, in the embodiments that the plurality of bins 10 are internally provided with the control bins 12, the control module 30 in all the bins 10 can act together, or the control module 30 in each bin 10 can act independently.

By way of example, in the embodiments that the plurality of bins 10 are internally provided with the thermal management module 20, the thermal management module 20 in all the bins 10 can act together, or the thermal management module 20 in each bin 10 can act independently.

In the embodiments, at least some of the bins 10 are internally provided with the energy bins 11 and the control bins 12, and at least part of the control module 30 and/or at least some of the thermal management module 20 is arranged in the bins 10, thus the spaces in the bins 10 can be fully utilized, thereby further improving the space utilization rate of the bins 10.

In some embodiments, at least some of the bins 10 includes first separators 101 which are arranged between the energy bins 11 and the control bins 12, and the energy bins 11 and the control bins 12 share the first separators 101.

The first separators 101 can include metal plates.

The first separators 101 can improve the structural strength of the bins 10, and can also improve the sealing performance and thermal insulation performance of the energy bins 11.

Heat exchange pipelines 40 and connecting wire harnesses 50 penetrate the first separators 101, the connecting wire harnesses 50 include high-voltage wire harnesses 51 and/or low-voltage wire harnesses 52; the thermal management module 20 in the control bins 12 can perform heat exchange on the energy units 2 in the energy bins 11 through the heat exchange pipelines 40 (for example, the liquid cooling pipelines 90), and the control module 30 in the control bins 12 can perform electrical control on the energy units 2 in the energy bins 11 through the connecting wire harnesses 50.

By way of example, when the heat exchange pipelines 40 and the connecting wire harnesses 50 penetrate the first separators 101, the penetrating positions can be sealed.

By way of example, the first separators 101 are filled with heat insulation media.

The heat insulation media can be materials capable of insulating heat, such as heat insulation cotton.

The heat insulation media can improve the structural strength of the first separators 101, and achieve the effects of flame retardance and heat preservation, which is beneficial to reducing the heat loss of the energy bins 11 and the influence of external heat on the energy units 2 in the energy bins 11.

In some embodiments, the bins 10 include a plurality of control bins 12, the control bins 12 can accommodate the control module 30 and the thermal management module 20, or all the control bins 12 accommodate the control module 30, or all the control bins 12 accommodate the thermal management module 20.

In some embodiments, a plurality of control bins 12 are provided, the first separators 101 can be arranged between adjacent control bins 12, and the adjacent control bins 12 share the first separators 101.

By way of example, the first separators 101 separate the thermal management module 20 from the control module 30, which reduces the risk of interference between the thermal management module 20 and the control module 30, thereby improving the reliability of the energy storage apparatus 100.

The thermal management module 20 and the control module 30 is separated by the first separators 101, and the first separators 101 can separate the thermal management module 20 from the control module 30, so that the interference of the thermal management module 20 to the control module 30 can be reduced, namely, the electromagnetic interference of a high-voltage line to low voltage can be reduced, and the influence of external rainfall or exposure to intensive sunlight on the control module 30 can be reduced.

There are a variety of arrangements for energy bins 11 and control bins 12.

In some embodiments, at least some of the control bins 12 and the energy bins 11 are arranged along the height direction of the bins 10.

Some of the control bins 12 and the energy bins 11 can be arranged along the height direction of the bins 10, or all the control bins 12 and the energy bins 11 can be arranged along the height direction of the bins 10.

By way of example, the control bins 12 are arranged above the energy bins 11, and therefore, the parts in the control bins 12 can block the thermal radiation at the top to reduce the influence of the thermal radiation on the inside of the energy bins 11.

By way of example, at least some of the control bins 12 and the energy bins 11 are arranged along the length direction of the bins 10.

Some of the control bins 12 and the energy bins 11 can be arranged along the length direction of the bins 10, or all the control bins 12 and the energy bins 11 can be arranged along the length direction of the bins 10.

By arranging the control bins 12 at the end portions of the bins 10, the spaces in the bins 10 can be utilized to the maximum, and in addition, the control bins 12 and the energy bins 11 can be arranged closer, which is conducive to improving the structural compactness.

In some embodiments, with reference to FIG. 3 to FIG. 4, and FIG. 22, at least some of the control bins 12 accommodate the thermal management module 20, and the thermal management module 20 is located at the topmost bin 10.

In the embodiments, the thermal management module 20 is located at the topmost bin 10, and the upper portions of the thermal management module 20 is not shielded by shielding objects, which facilitates heat dissipation of the thermal management module 20, thereby prolonging the service life of the energy storage apparatus 100. Moreover, the overall height of center of gravity of the single bin 10 can be reduced, which improves the transportation safety. In addition, the energy bins 11 are separated, so that the heat preservation and insulation effects of the energy bins 11 are improved.

In some embodiments, with reference to FIG. 6 to FIG. 7, some of the control bins 12 accommodate the control module 30. The control module 30 and the energy bins 11 are arranged in the height direction of the bins 10.

That is, the control module 30 can be located above the energy bins 11, or below the energy bins 11, or between two energy bins 11 in the height direction.

For example, when there are two bins 10, the control module 30 is arranged on the top of the lower bin 10, namely, the control module 30 is located above the energy bins 11 in the lower bin 10, the height of an operating part meets the requirement of human engineering, maintenance personnel can reach an operating handle of a control part by standing on one side of the bins 10, which facilitates maintenance and overhaul; and moreover, the control bins 12 are arranged at the top, which is conducive to reducing the lengths of the high-voltage wire harnesses 51 and the low-voltage wire harnesses 52 connected to the upper bin 10, thereby reducing the cost.

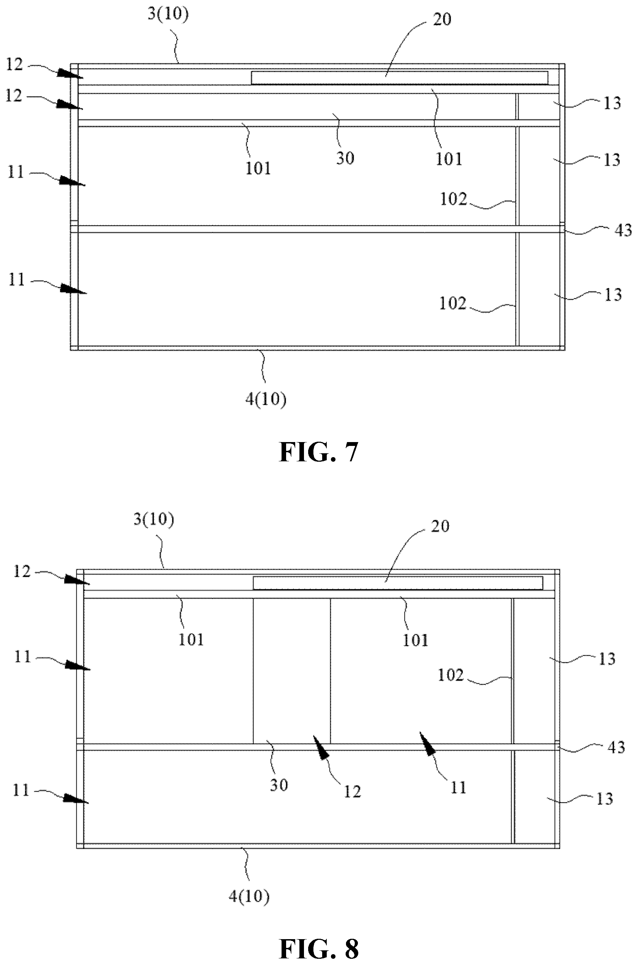

In some embodiments, with reference to FIG. 8 to FIG. 9, and FIG. 19 to FIG. 24, and some of the control bins 12 accommodate the control module 30. The control module 30 and the energy bins 11 are arranged in the length direction of the bins 10.

That is, the control module 30 can be located at the left ends of the energy bins 11, or the right ends of the energy bins 11, or between two energy bins 11 in the length direction.

In some embodiments, with reference to FIG. 3 to FIG. 13, the energy storage apparatus 100 includes pipeline bins 13 which are configured to accommodate at least some of connecting pipelines among the control module 30, the thermal management module 20, and the energy units 2.

By way of example, the connecting pipelines can be the liquid cooling pipelines 90, the high-voltage wire harnesses 51, the low-voltage wire harnesses 52, fire-fighting pipelines, water fire-fighting pipelines and the like.

The pipeline bins 13 are at least configured to accommodate at least some of the connecting pipelines among the control module 30, the thermal management module 20, and the energy units 2, that is, the connecting pipelines and/or connecting lines among the control module 30, the thermal management module 20, and the energy units 2 can partially penetrate the pipeline bins 13 and can also completely penetrate the pipeline bins 13.

Definitely, the pipeline bins 13 can also be configured to accommodate other parts of the energy storage apparatus 100, such as the fire-fighting control module 304.

By way of example, the high-voltage wire harnesses 51 and the low-voltage wire harnesses 52 for the pipeline bins 13 to connect the energy bins 11 and the control bins 12 are connected through connectors mounted on partition walls; the pipeline connection between the pipeline bins 13 and the energy bins 11 is implemented through liquid cooling adapters; and through-wall interfaces are sealed.

In the embodiments, the energy storage apparatus 100 is provided with the pipeline bins 13 which are configured to accommodate at least some of the connecting pipelines among the control module 30, the thermal management module 20 and the energy units 2, thus wiring and pipe passing are facilitated, reasonable layout of the connecting pipelines is ensured, and maintenance and replacement are facilitated.

In some embodiments, with reference to FIG. 6 to FIG. 9, each bin 10 is provided with the pipeline bins 13, that is, one bin 10 is provided with one pipeline bins 13, definitely, one bin 10 can be provided with a plurality of pipeline bins 13, and at least some of the connecting pipelines among the control module 30, the thermal management module 20, and the energy units 2 in one bin 10 can be accommodated in the corresponding pipeline bins 13, therefore, wiring and pipe distribution are facilitated, the layout of the connecting pipelines is reasonable, and the maintenance and replacement are facilitated.

In some embodiments, some of the bins 10 are provided with the pipeline bins 13, while the other bins 10 are not provided with the pipeline bins 13.

Some of the bins 10 are provided with the pipeline bins 13, while the other bins 10 are not provided with the pipeline bins 13, that is, one pipeline bins 13 correspondingly accommodates at least some of the connecting pipelines among the control module 30, the thermal management module 20, and the energy units 2 of the plurality of bins 10. For example, when there are two bins 10, one bin 10 is provided with the pipeline bins 13, while the other bin 10 is not provided with the pipeline bins 13, and the pipeline bins 13 correspondingly accommodates at least some of the connecting pipelines among the control module 30, the thermal management module 20, and the energy units 2 of the two bins 10.

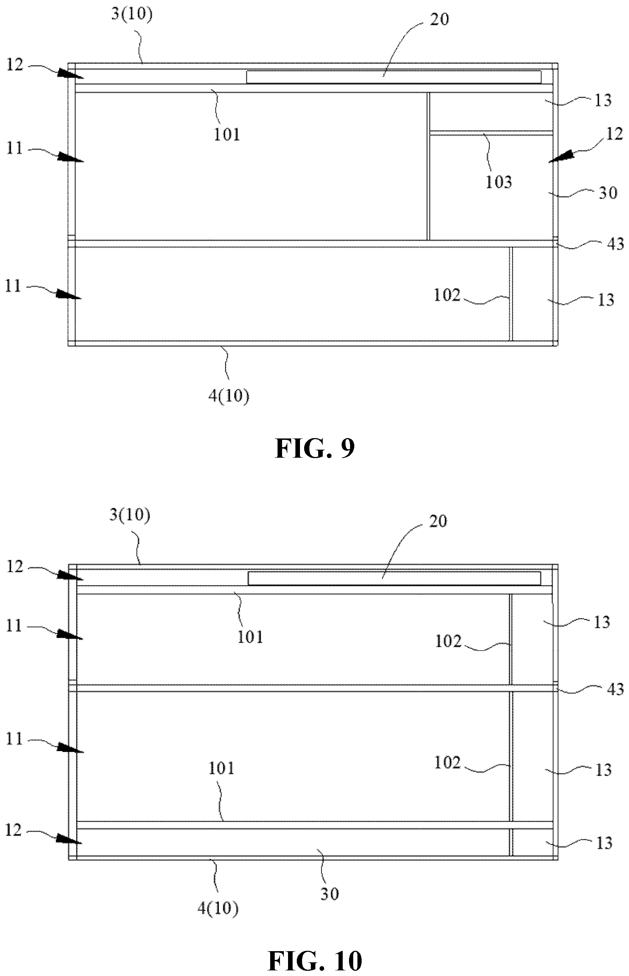

In some embodiments, with reference to FIG. 10 to FIG. 13, at least some of the bins 10 are internally provided with the energy bins 11 and the control bins 12, the energy bins 11 are configured to accommodate at least one energy unit 2, at least part of the control module 30 and/or at least some of the thermal management module 20 is accommodated in the control bins 12, the pipeline bins 13 are arranged in the bins 10, and the pipeline bins 13 and the energy bins 11 are arranged in the length direction of the bins 10.

That is, the pipeline bins 13 can be arranged at the left ends of the energy bins 11, or the right ends of the energy bins 11, or between the two energy bins 11 in the length direction.

Definitely, in the embodiments that the control bins 12 are provided, the pipeline bins 13 and the energy bins 11 can be arranged in the length direction or height direction of the bins 10.

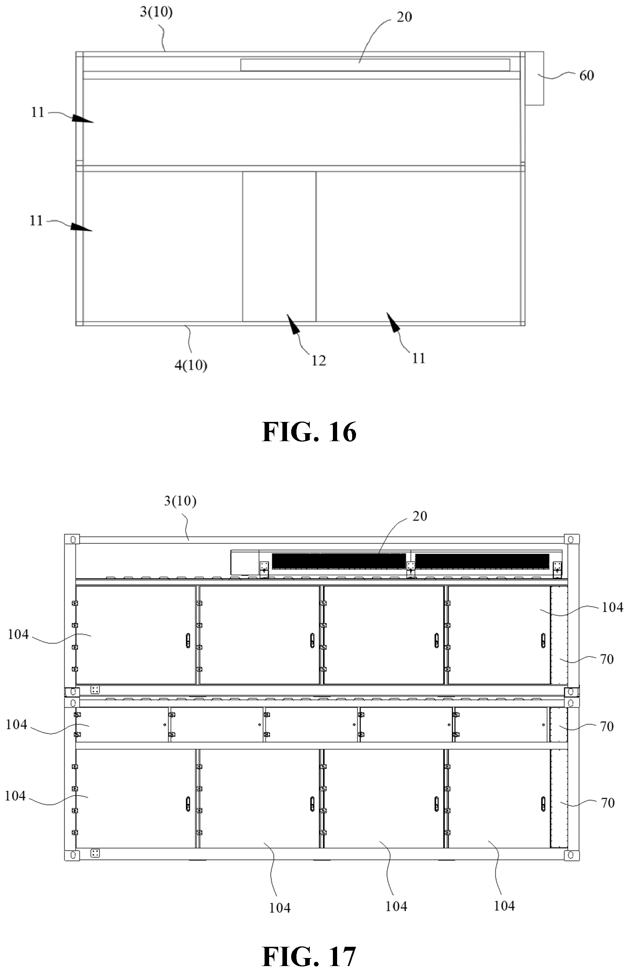

In other embodiments, with reference to FIG. 16, the pipeline bins 13 are arranged outside the bins 10, by way of example, a protective cover 60 is arranged, and the pipeline bins 13 are arranged in the protective cover 60, or the protective cover 60 and the bins 10 define the pipeline bins 13.

It is to be noted that in the embodiments that the pipeline bins 13 are arranged outside the bins 10, the pipeline bins 13 do not belong to the bins 10, and therefore the sizes of the pipeline bins 13 are not calculated within the sizes of the bins 10.

In some embodiments, with reference to FIG. 6 to FIG. 9, at least some of the bins 10 include second separators 102 which are arranged between the energy bins 11 and the pipeline bins 13, and the energy bins 11 and the pipeline bins 13 share the second separators 102.

The second separators 102 can include the metal plates.

The second separators 102 can improve the structural strength of the bins 10 and can also improve the sealing performance and the heat preservation performance of the energy bins 11.

In some embodiments, with reference to FIG. 9 and FIG. 13, at least some of the bins 10 include third separators 103 which are arranged between the pipeline bins 13 and at least some of the control bins 12, and the pipeline bins 13 and at least some of the control bins 12 share the third separators 103.

The third separators 103 can include the metal plates.

The third separators 103 can improve the structural strength of the bins 10 and can also improve the sealing performance and the heat preservation performance of the control bins 12.

By way of example, the control bins 12 which accommodate thee thermal management module 20 can communicate with the pipeline bins 13, so that the energy bins 11 can connected to the control bins 12 which accommodate the thermal management module 20 through the pipeline bins 13.

By way of example, the control bins 12 which accommodate the control module 30 can be separated from the pipeline bins 13.

In some embodiments, with reference to FIG. 4, first bin doors 104 of the energy bins 11, the control bins 12, and the pipeline bins 13 are all located on the front sides of the bins 10.

In the embodiments, the first bin doors 104 of the energy bins 11, the control bins 12, and the pipeline bins 13 are arranged on the front sides of the bins 10, so that maintenance can be carried out through the respective first bin doors 104, thereby reducing land waste caused by reserving a necessary maintenance channel more than 3 m between every two bins 10 of traditional bins 10; and only a normal maintenance channel for paint repair is needed to be reserved between matts-shaped bins 10, which improves the land investment returns of the users and increases the energy yield per unit area for the users.

In some embodiments, with reference to FIG. 17, at least some of the bins 10 are internally provided with the energy bins 11 and the control bins 12, the energy bins 11 are configured to accommodate at least one energy unit 2, and at least part of the control module 30 and/or at least some of the thermal management module 20 is accommodated in the control bins 12; the first bin doors 104 are arranged on at least one side of the bins 10 in the width direction, second bin doors 70 are arranged on at least one side of the control bins 12 and/or the pipeline bins 13 in the width direction, or, the second bin doors 70 are arranged on the sides the control bins 12 and/or the pipeline bins 13 deviating from the energy bins 11 of in the length direction.

The second bin doors 70 can be access doors through which the energy storage apparatus 100 can be conveniently maintained.

The energy bins 11, the control bins 12, and the pipeline bins 13 can all be provided with the access doors.

By way of example, the control bins 12 are arranged at the ends of the first bin doors 104 away from the energy bins 11, and are separated from the metal plates through high voltage and low voltage inside, thereby reducing the electromagnetic interference of the high-voltage line on the low voltage.

By way of example, the control bins 12 are provided with threading ports for external wiring in the top and bottom; wire harnesses connected to a PCS and an EMS are connected to the control bins 12 and then led out of the bins 10 through the threading ports in the bottom, and auxiliary wire harnesses connected to the bins 10 are led into the bins 10 through the threading ports in the bottom; for the upper bins 10, the wire harnesses also need to penetrate through the top of the bottom bins 10 and then are led out through the bottom of the lower bins 10; detachable mounting plates are arranged at openings in the tops of the bins 10, and the mounting plates and the bins 10 are sealed; when the bins 10 are placed at the bottom layer, it is needed to disassemble the mounting plates at the upper layer in advance; and when the bins 10 are placed at the top layer, it is not needed to disassemble the mounting plates at the top.

In some embodiments, with reference to FIG. 17, the second bin doors 70 are arranged on at least the side of the control bins 12 and/or the pipeline cabins 13 along the width direction.

That is, the bins 10 can be provided with the second bin doors 70 on at least the sides along the width direction, or provided with the second bin doors 70 on both sides along the width direction, so that the second bin doors 70 are arranged in areas of the bins 10 corresponding to at least some of the control bins 12 and/or some of the pipeline cabins 13.

By way of example, the second bin doors 70 are arranged on the right sides of the upper-layer bins 10, the right sides of the control bins 12, and the right sides of the lower-layer bins 10; and the liquid cooling pipelines 90, the high-voltage wire harnesses 51, the low-voltage wire harnesses 52 and the like can be overhauled only by opening the second bin doors 70.

In the embodiments, it reduces the land waste caused by reserving a necessary maintenance channel more than 3 m between every two bins 10 of traditional bins 10; and only the normal maintenance channel for paint repair is needed to be reserved between matts-shaped bins 10, which improves the land investment returns of the users and increases the energy yield per unit area for the users.

In some embodiments, with reference to FIG. 19 to FIG. 24, at least some of the bins 10 include fourth separators 105 which divides the control bins 12 into first bin bodies 121 and second bin bodies 122, the first bin bodies 121 and the second bin bodies 122 share the fourth separators 105, the first bin bodies 121 are configured to accommodate the thermal management module 20, and the second bin bodies 122 are configured to accommodate the control module 30.

The first bin bodies 121 are separated from the second bin bodies 122 by the fourth separators 105, the fourth separators 105 can separate the thermal management module 20 from the control module 30, thus reducing the interference of the thermal management module 20 on the control module 30, that is, the electromagnetic interference of the high-voltage line on the low voltage can be reduced, and the influence of external rainfall or sunlight exposure on the control module 30 can also be reduced.

The fourth separators 105 can include the metal plates.

The fourth separators 105 can improve the structural strength of the bins 10 and can also improve the sealing performance and the heat preservation performance of some of the control bins 12.

In the embodiments, the fourth separators 105 separate the thermal management module 20 from the control module 30, which reduces the risk of interference between the thermal management module 20 and the control module 30, thereby improving the reliability of the energy storage apparatus 100.

In some embodiments, with reference to FIG. 19 to FIG. 21, the first bin bodies 121 and the second bin bodies 122 are arranged in the width direction of the bins 10, and the first bin bodies 121 are arranged on the front sides of the second bin bodies 122.

The first bin bodies 121 are arranged on the front sides of the second bin bodies 122, the upper portions and the side surfaces of the thermal management module 20 is not shielded by the shielding objects, which facilitates heat dissipation of the thermal management module 20.

In the embodiments, the first bin bodies 121 are arranged on the front sides of the second bin bodies 122, namely, the first bin bodies 121 are arranged on the front sides of the bins 10, water ports of the heat exchange pipelines 40 are also formed in the front sides of the energy bins 11, namely, the water ports of the heat exchange pipelines 40 are formed in the front sides of the bins 10, and therefore, the connection between the thermal management module 20 and the heat exchange pipelines 40 is facilitated, and moreover, the number of elbows of the heat exchange pipelines 40 can be reduced, thus the flow resistance is reduced, and the temperature control effect of the thermal management module 20 is improved.

By way of example, the first bin bodies 121 and the second bin bodies 122 can be stacked in the height direction, and the first bin bodies 121 are located above the second bin bodies 122.

In some embodiments, with reference to FIG. 6 to FIG. 13, and FIG. 19 to FIG. 24, the plurality of bins 10 include the first bins 3 and the second bins 4, the first bins 3 are located above the second bins 4, at least the first bins 3 accommodate the plurality of energy units 2, the thermal management module 20 is arranged in the first bins 3 and are arranged along the length direction of the first bins 3 with the plurality of energy units 2, and the control module 30 is arranged in the first bins 3 and/or the second bins 4.

The first bins 3 and the second bins 4 are stacked in the height direction, and the first bins 3 are located above the second bins 4.

The control module 30 is arranged in the first bins 3 and/or the seconds 4, that is, the control module 30 can be arranged in the first bins 3, or in the second bins 4, or in the first bins 3 and the second bins 4.

The thermal management module 20 is arranged in the first bins 3 and are arranged along the length direction of the first bins 3 with the plurality of energy units 2, that is, the thermal management module 20 is arranged at the end portions of the first bins 3, so that the spaces in the first bins 3 are utilized to the maximum, and the structural compactness is improved.

The first bins 3 are located above the second bins 4, thus the thermal management module 20 can be located at the top of the energy storage apparatus 100; and the upper portions of the thermal management module 20 is not shielded by the shielding objects, which further facilitates the heat dissipation of the thermal management module 20.

In the embodiments, the thermal management module 20 is accommodated in the control bins 12 in the upper first bins 3, which facilitates the heat dissipation of the thermal management module 20, and more heat dissipation channels can be provided for the thermal management module 20, thereby improving the temperature control effect of the thermal management module 20. Moreover, the overall height of center of gravity of a single energy storage cabinet 100a can be reduced, which improves the transportation safety. In addition, the thermal management module 20 is arranged at the end portions of the first bins 3, so that the spaces in the first bins 3 are utilized to the maximum, and the structural compactness is improved.

In other embodiments, the thermal management module 20 can be arranged on the tops of the energy bins 11; and/or; the thermal management module 20 can be arranged at the bottoms of the energy bins 11; and/or, the thermal management module 20 is arranged at the bottoms of the second bins 4; and/or, the thermal management module 20 is arranged on the tops of the second bins 4.

By way of example, the first bins 3 include the energy bins 11, the pipeline bins 13, and the control bins 12 which accommodate the thermal management module 20, in which, the energy bins 11 are separated from the pipeline bins 13 and the control bins 12 which accommodate the thermal management module 20, the control bins 12 which accommodate the thermal management module 20 communicate with the pipeline bins 13, and the energy bins 11 are connected to the upper control bins 12 which accommodate the thermal management module 20 through the pipeline bins 13 and are connected to the lower bins 10 at the same time; the energy bins 11 accommodates thee energy units 2, the connecting pipelines between the energy units 2, the connecting wire harnesses 50 between the energy units 2, a main liquid cooling pipeline 91, a fire fighting sensor and the like; the pipeline bins 13 include through-wall liquid cooling pipelines 90, the high-voltage wire harnesses 51, the low-voltage wire harnesses 52, the fire-fighting pipelines, the water fire-fighting pipeline and the like; and the control bins 12 which accommodate the thermal management module 20 includes liquid cooling units and fixing bracket thereof, the top walls and/or side walls of the control bins 12 which accommodate the thermal management module 20 is provided with ventilation openings 14, and the ventilation openings 14 are configured to perform ventilation on the thermal management module 20.

By way of example, the second bins 4 include the energy bins 11, the pipeline bins 13, and the control bins 12 which accommodate the control module 30; the energy bins 11, the pipeline bins 13, and the control bins 12 which accommodate the control module 30 is separated from one another; the energy bins 11 are connected to the upper control bins 12, the pipelines of the first bins 3, external high-voltage wire harnesses 51, and external low-voltage wire harnesses 52 through the pipeline bins 13; the energy bins 11 include the energy units 2, connecting pipelines among the energy units 2, the main liquid cooling pipelines 91, the connecting wire harnesses 50 among the energy units 2, the fire-fighting sensor and the like; the control bins 12 include a main control box and a power distribution general control box; and the pipeline bins 13 include the connecting wire harnesses 50 between the control bins 12 and the energy bins 11, the high-voltage wire harnesses 51 and low-voltage wire harnesses 52 connected to the upper energy bins 11, pipelines and wire harnesses connected to the upper unit, a fire-fighting control system, fire-fighting pipelines, the high-voltage wire harnesses 51 and low-voltage wire harnesses 52 connected to the external PCS and EMS, the water fire-fighting pipelines and the like.

In order to facilitate rapid field mounting of the customers, the control module 30 and the thermal management module 20 are integrated in the bins 10, and the bins 10 can be connected to the PCS and the EMS after being stacked on site, thus the workload of mounting on site is reduced, the assembling efficiency is improved and the customer can use conveniently.

The PCS (Power Conversion System) can control the charging and discharging processes of a storage battery, perform AC-DC conversion and directly supply power to an AC load in case of no power grid. The PCS includes a DC/AC bidirectional converter, a control unit and the like. A PCS controller receives a background control instruction through communication and controls the converter to charge or discharge the battery according to a symbol and the size of the power instruction, so as to adjust active power and reactive power of the power grid. The PCS controller communicates with a BMS through a CAN interface to acquire status information of a battery pack, thus archiving protective charging and discharging of the battery.

The EMS (Energy Management System) is a set of software and hardware for monitoring, controlling, analyzing and optimizing an energy system. The EMS realizes efficient management and optimal configuration of energy by monitoring and intelligently controlling various links of energy production, distribution and consumption in real time.

In some embodiments, with reference to FIG. 13, at least the second bins 4 accommodate the plurality of energy units 2, and the control module 30 is arranged in the second bins 4 and are arranged along the length direction of the second bin 4 with the plurality of energy units 2.

In the embodiments, the control module 30 is arranged in the second bins 4 and are arranged along the length direction of the second bins 4 with the plurality of energy units 2, and the thermal management module 20 and the control module 30 is arranged in the first bins 3 and the second bins 4 respectively, thus the thermal management module 20 can be separated from the control module 30, thereby reducing the interference of the thermal management module 20 on the control module 30; and in addition, the control module 30 can be arranged at the end portions of the second bins 4, so that the spaces in the second bins 4 can be used to the maximum, thereby improving the structural compactness.

In some embodiments, with reference to FIG. 5, the top walls and/or side walls of at least some of the bins 10 are provided with the ventilation openings 14, and the ventilation openings 14 are configured to perform ventilation on the thermal management module 20.

The ventilation openings 14 are formed in the top walls of at least some of bins 10, namely, the bins 10 which accommodate the thermal management module 20 is provided with the ventilation openings 14.

The top walls of the bins 10 can be completely opened to form one ventilation opening 14. Or, the top walls of the bins 10 are partially opened to form one ventilation opening 14; for example, the sides of the top walls of the bins 10 in the length direction are provided with openings, so that the top walls of the bins 10 partially form the ventilation opening 14.

By way of example, the ventilation openings 14 in the top walls of the bins 10 can be configured to exhaust air, and the ventilation openings 14 in the side walls of the bins 10 can be configured to introduce air.

In the embodiments, the ventilation openings 14 are located in the top walls of the bins 10, which facilitates the heat dissipation of the thermal management module 20, thus more heat dissipation channels can be provided for the thermal management module 20, thereby improving the temperature control effect of the thermal management module 20.

In some embodiments, with reference to FIG. 4, the plurality of energy units 2 are accommodated in each bin 10, at least some of the bins 10 include first connectors 6 which are electrically connected to the control module 30, each bin 10 includes a second connector 7; the second connectors 7 are electrically connected to the plurality of energy units 2; and the first connectors 6 are matched with the second connectors 7.

At least some of the bins 10 include the first connectors 6, namely, some of the bins 10 include the first connectors 6, the other bins 10 do not include the first connectors 6, or all the bins 10 include the first connectors 6.

The first connectors 6 can be directly connected to the second connectors 7 to realize the matching therebetween, for example, the first connectors 6 are in plug-in fit with the second connectors 7. The first connectors 6 are fixed to the control bins 12, and the second connectors 7 are movably arranged in the bins 10; or, the first connectors 6 are movably arranged in the control bins 12, and the second connectors 7 are fixedly arranged in the bins 10; or the first connectors 6 and the second connectors 7 are movably arranged in the control bins 12 and the bins 10 respectively. The first connectors 6 can include a plurality of connecting parts, and the connecting parts are in one-to-one correspondence with the second connectors 7 to realize the connection of the first connectors 6 and the second connectors 7.

By way of example, the first connectors 6 are arranged on the first separators 101 and/or the third separators 103 of the control bins 12 for example.

The first connectors 6 and second connectors 7 can be connected through connecting members, and the connecting members can be cables. The first connectors 6 and the second connectors 7 can be fixed to the bins 10 respectively; or, the first connectors 6 can be fixed to the bins 10, and the second connectors 7 are movably arranged on the bins 10; or, the first connectors 6 can be movably arranged on the bins 10, and the second connectors 7 are fixedly arranged on the bins 10; or, the first connectors 6 and the second connectors 7 can be movably arranged on the bins 10 respectively.

By way of example, the first connectors 6 are fixedly arranged to the control bins 12, the two second connectors 7 are fixed to the two bins 10 respectively, and the first connectors 6 and the second connectors 7 are connected through the cables. The cables can be quick-plug cables, with both ends provided with quick connectors; and the two quick connectors are connected to the first connectors 6 and the second connectors 7 respectively.

In the embodiments that the first connectors 6 and the second connectors 7 are connected through the cables, the cables can at least partially penetrate the bins 10, or the cables partially penetrates through the bins 10; or, ports of the first connectors 6 are be located outside the control bins 12, and the cables are completely located outside the control bins 12; or, ports of the second connectors 7 are located outside the bins 10, and the cables are completely located outside the bins 10.

In the embodiments, each first connector 6 is matched with the corresponding second connector 7 to realize quick connection between the control module 30 and the energy units 2, which makes the connection between the control module 30 and the energy unit 2 more convenient.

In some embodiments, with reference to FIG. 4, the energy storage apparatus 100 includes a plurality of battery apparatuses 80, each battery apparatus 80 includes a thermal management part 82 and the plurality of energy units 2, and the thermal management part 82 is configured to adjust the temperature of the energy units 2. At least some of the bins 10 include third connectors 8, each bin 10 includes a fourth connector 9; the third connectors 8 communicate with the thermal management module 20; and the fourth connectors 9 communicate with the thermal management parts 82. The third connectors 8 are matched with the fourth connectors 9.

By way of example, the thermal management parts 82 can be plate-shaped or tube-shaped, and flow channels are formed in the thermal management parts 82 and can be configured to introduce fluid to heat or cool the energy units 2. The fluid can be refrigerants or cooling liquid.

When the battery apparatuses 80 are battery modules, the thermal management parts 82 can be bottom plates, top plates or side plates of the battery modules and can also be located between adjacent energy units 2.

When the battery apparatuses 80 are the battery packs, with reference to FIG. 18, the thermal management parts 82 can be part of a box 81 or the thermal management parts 82 are located in accommodating spaces of the box 81, and the thermal management parts 82 can also be located between the adjacent energy units 2.

At least some of the bins 10 include the third connectors 8, that is, some of the bins 10 include the third connectors 8, the other bins 10 do not include the third connectors 8, or all the bins 10 include the third connectors 8.

The third connectors 8 can directly communicate with the fourth connectors 9 to realize the matching therebetween, for example, each third connectors 8 is in plug-in fit with the corresponding fourth connector 9. The third connectors 8 can be fixed to the control bins 12, and the fourth connectors 9 are movably arranged in bins 10; or, the third connectors 8 are movably arranged in the control bins 12, and the fourth connectors 9 are fixedly arranged in the bins 10; or, the third connectors 8 and the fourth connectors 9 are movably arranged in the control bins 12 and the bins 10 respectively. The third connectors 8 can include a plurality of connecting parts, and the connecting parts are in one-to-one correspondence with the fourth connectors 9 to realize the communication between the third connectors 8 and the plurality of fourth connectors 9.

By way of example, the third connectors 8 can be arranged in the first separators 101 and/or the third separators 103 of the control bins 12 for example.

The third connectors 8 can also communicate with the fourth connectors 9 through the connecting members, and the connecting members can be pipelines. The third connectors 8 and the fourth connectors 9 can be fixed to the control bins 12 and the bins 10 respectively; or, the third connectors 8 can also be fixed to the control bins 12, and the fourth connectors 9 are movably arranged in the bins 10; or, the third connectors 8 can also be movably arranged in the control bins 12, and the fourth connectors 9 are fixedly arranged in the bins 10; or, the third connectors 8 and the fourth connectors 9 can also be movably arranged in the control bins 12 and the bins 10 respectively.

As an example, the thermal management module 20 is provided with the third connectors 8; each bin 10 is provided with the fourth connector 9; and the third connectors 8 communicate with the fourth connectors 9 through the pipelines. The pipelines can be the quick-plug pipelines, with both ends provided with the quick-plug connectors; the first connectors 6 and the second connectors 7 are also quick-plug connectors; and the two quick-plug connectors at both ends of the pipelines are connected to the first connectors 6 and the second connectors 7 respectively.

In the embodiments, the third connectors 8 and the fourth connector 9 are matched to realize quick communication between the thermal management parts 82 and the thermal management module 20, which facilitates mounting of the thermal management module 20.

In some embodiments, with reference to FIG. 4 and FIG. 18, the thermal management module 20 communicates with a plurality of thermal management parts 82 through the liquid cooling pipelines 90; the liquid cooling pipelines 90 include a main pipeline 91 and the plurality of branch pipelines 92, the plurality of branch pipelines 92 are connected to the main pipeline 91 in parallel, the main pipeline 91 communicate with the thermal management module 20, and the plurality of branch pipelines 92 respectively communicate with the plurality of thermal management parts 82; the main pipeline 91 is located above the plurality of battery apparatuses 80, or, the main pipeline 91 is located below the plurality of battery apparatuses 80.

In the embodiments that the main pipeline 91 is located above the plurality of battery apparatuses 80, the liquid cooling media flow to the plurality of branch pipelines 92 from top to bottom through the main pipeline 91 so as to cool the battery apparatuses 80.

In the embodiments that the main pipeline 91 is located below the plurality of battery apparatuses 80, the liquid cooling media flow to the plurality of branch pipelines 92 from bottom to top through the main pipeline 91 so as to cool the battery apparatuses 80.

By way of example, the energy storage apparatus 100 includes two bins 10, and the energy units 2 are accommodated in both the bins 10, the main pipeline 91 is located above the two bins 10, or, the main pipeline 91 is located below the two bins 10, or one main pipeline 91 is located above one bin 10, and the other one is located below the other bin 10.

The main pipeline 91 is arranged above the plurality of battery apparatuses 80, or, below the plurality of battery apparatuses 80, which is conducive to shortening the liquid cooling pipelines 90, thereby reducing the cost, and improving the cooling efficiency.

In some embodiments, the energy units 2 are battery cells, and the weight of each energy unit 2 is 5-60 kg.

The weight of the single energy unit 2 can be a point value of any one or a point value between any two of 5 kg, 10 kg, 15 kg, 20 kg, 25 kg, 30 kg, 35 kg, 40 kg, 45 kg, 50 kg, 55 kg, and 60 kg. As an example, the mass of the single energy unit 2 is 30 kg.

The energy units 2 have proper weight, so that a proper amount of energy units 2 can be accommodated into the bins 10, and the energy density is moderate under the condition of meeting the transportation requirements.

In some embodiments, the energy storage apparatus 100 includes the energy storage cabinet 100a, the energy storage cabinet 100a includes the bins 10 and the parts arranged in the bins 10, the weight of the energy storage cabinet 100a is M, the total weight of the energy units 2 in the bins 10 is M1, (M1/M) × 100% ≥ 60%.

By way of example, (M1/M) × 100% can be 60%, 61%, 62%, 63%, 64%, 65%, 66%, 67%, 68%, 69%, 70%, 71%, 72%, 73%, 74%, 75%, 76%, 77%, 78%, 79%, 80%, 90%.

Therefore, on one hand, the weight ratio of the energy units 2 in the bins 10 per unit volume can be increased, thereby increasing the electric quantity of the energy storage apparatus 100 per unit volume; on the other hand, during the transportation of the energy storage apparatus 100, more energy units 2 which contribute to energy storage and are high in production difficulty and cannot be produced at a destination are transported, while other structures can be produced at a place closer to the destination without transportation or reduced transportation; and after the bins 10 are assembled into the energy storage apparatus 100, the transportation cost of the assembled energy storage apparatus 100 is reduced.

In some embodiments, (M1/M) × 100% ≥ 80%.

By way of example, (M1/M) × 100% can be 80%, 81%, 82%, 83%, 84%, 85%, 86%, 87%, 88%, 89%, or 90%.

Therefore, the transportation cost of the assembled energy storage apparatus 100 can be further reduced.

In some embodiments, the energy storage apparatus 100 includes the energy storage cabinet 100a, the energy storage cabinet 100a includes the bins 10 and the parts arranged in the bins 10, the weight of the energy storage cabinet 100a is M, a plurality of battery apparatuses 80 are arranged in the bins 10, each battery apparatus 80 includes the box 81 and the plurality of energy units 2, the plurality of energy units 2 are accommodated in the box 81, the total weight of the battery apparatuses 80 is M2, 70% ≤ (M2/M) × 100% ≤ 90%.

(M2/M) × 100% can be a point value of any one or a point value between any two of 70%, 71%, 72%, 73%, 74%, 75%, 76%, 77%, 78%, 79%, 80%, 81%, 82%, 83%, 84%, 85%, 86%, 87%, 88%, 89%, and 90%.

When (M2/M) × 100% ≥ 70%, the weight ratio of the energy units 2 in the bins 10 per unit volume can be improved, and the energy density of the bins 10 is improved; and when (M2/M) × 100% ≤ 90%, the structural strength of the bins 10 can be maintained. Therefore, when 70% ≤ (M2/M) × 100% ≤ 90%, the energy density of the energy storage cabinet 100a and the structural strength of the bins 10 can be balanced, so that the practicability of the bins 10 is improved.

In some embodiments, the plurality of battery apparatuses 80 can be arranged in rows and ranks, the plurality of battery apparatuses 80 in each row are arranged along the length direction, the plurality of battery apparatuses 80 in each rank are arranged along the height direction, and each battery apparatus 80 includes the thermal management part 82 and the plurality of energy units 2. The bins 10 also includes the third connectors 8 and the plurality of fourth connectors 9; each third connector 8 communicates with the corresponding thermal management module 20 and the corresponding fourth connector 9; and each fourth connector 9 communicates with the corresponding thermal management part 82 of the plurality of battery apparatuses 80 in each rank.

By way of example, the plurality of battery apparatuses 80 are arranged in 2 layers by 2 ranks, 3 layers by 3 ranks, 4 layers by 4 ranks, and 4 layers by 3 ranks.

It is to be noted that the plurality of battery apparatuses 80 can also be arranged in a plurality of rows, such as 2 rows, 3 rows, 4 rows, 5 rows or 6s rows; and the plurality of battery apparatuses 80 can also be arranged in a plurality of ranks, such as 2 ranks, 3 ranks, 4 ranks, 5 ranks or 6 ranks.

In some embodiments, the volume of the bins 10 is V, the total volume of the energy units 2 in the bins 10 is V1, (V1/V) × 100% ≥ 30%.

The energy units 2 include shells, and the volume of the energy units 2 is the volume of the shells. For example, the energy units 2 are square-shell energy units 2, and the product of the length, width and height of the square-shell energy units 2 is the product of the length, width and height of the shells.

In the embodiments that the energy units 2 further include electrode terminals, the electrode terminals are arranged on the shells and partially protrude out of the shells, the electrode terminals are electrically connected to an electrode assembly, and the parts of the electrode terminals protruding out of the shells are not calculated as the volume of the energy units 2.

(V1/V) × 100% can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, or 70%.

On one hand, the weight ratio of the energy units 2 in the bins 10 per unit volume can be increased, thereby increasing the electric quantity of the energy storage apparatus 100 per unit volume; on the other hand, during the transportation of the energy storage apparatus 100, more energy units which contribute to energy storage and are high in production difficulty and cannot be produced at a destination are transported, while other functional elements such as control elements of the energy storage apparatus 100 can be produced at a place closer to the destination without transportation or reduced transportation; and after the bins 10 are assembled into the energy storage apparatus 100, the transportation cost of the assembled energy storage apparatus 100 is reduced.

In some embodiments, (V1/V) × 100% ≥ 50%.

(V1/V) × 100%can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, or 90%.

The transportation cost of the assembled energy storage apparatus 100 can be further reduced.

In some embodiments, the volume of the bins 10 is V, the plurality of battery apparatuses 80 are arranged in the bins 10, each battery apparatus 80 includes the box 81 and the plurality of energy units 2, the plurality of energy units 2 are accommodated in the box 81, the total volume of the battery apparatuses 80 is V2, 50% ≤ (V2/V) × 100% ≤ 80%.

The volume of the energy units 2 is the volume of the box 81. For example, the box 81 is of a cuboid structure, and the volume of the energy units 2 is equal to the product of the length, width and height of the box 81.

(V2/V) × 100%can be a point value of any one or a point value between any two of 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%.

When (V2/V) × 100% ≥ 50%, the volume ratio of the energy units 2 in the bins 10 per unit volume can be improved, and the energy density of the energy storage apparatus 100 is improved; and when (V2/V) × 100% ≤ 80%, the bins 10 can have structural members with enough volume to maintain the structural strength. Therefore, when 50%≤(V2/V)×100%≤80%, the energy density of the energy storage apparatus 100 and the structural strength of the bins 10 can be balanced, and the practicability of the bins 10 is improved.

In some embodiments, with reference to FIG. 6, the energy storage apparatus 100 includes the energy storage cabinet 100a, the energy storage cabinet 100a includes the bins 10 and the parts arranged in the bins 10, the energy of the energy storage cabinet 100a is E, the sizes of the bins 10 in the length direction is a, the size of the bins 10 in the width direction 10 is b, 250KW/*m*² ≤ E/(a × b) ≤ 700KW/*m*².

E/(a × b) can be a point value of any one or a point value between any two of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², 700 KW/m².

The energy E can be obtained from a nameplate of the energy storage apparatus 100.

When E/(a × b) ≥ 250KW/m², the energy storage apparatus 100 can have large energy density, and thus the practicability of the energy storage apparatus 100 is improved; when (a×b)≤700KW/m², the risk that the bins 10 are large in mass and consequently other bins 10 are crushed can be reduced, and transportation of the bins 10 is facilitated. Therefore, when 250KW/*m*² ≤ E/(a × b) ≤ 700KW/*m*², the energy density of the energy storage apparatus 100 and the mass setting of the bins 10 are balanced, thereby improving the practicability of the energy storage apparatus 100 as well as facilitating the transportation of the energy storage apparatus 100.

In some embodiments, 450KW/*m*² ≤ E/(a × b) ≤ 600KW/*m*².

E/(a × b)can be a point value of any one or a point value between any two of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², 550 KW/m², 600 KW/m².

An as example, E/(a × b) = 490KW/*m*². The energy density of the energy storage apparatus 100 and the mass setting of the bins 10 can be further improved, and transportation of the energy storage apparatus 100 is facilitated.

In some embodiments, every two adjacent bins 10 are welded, clamped, locked or connected by a fixing member along the height direction.

The fixing member can be at least one of a bolt, a nut, a pin or a rivet. Definitely, the fixing member can also include a fixing plate and the like for fixedly connecting every two adjacent bins 10 in the height direction.

By way of example, every two adjacent bins 10 in the height direction are connected through a middle twist lock.

Every two adjacent bins 10 in the height direction can be are connected through the fixing members and can be limited by the fixing members, which is conducive to reducing the risk that every two adjacent bins 10 move mutually after being stacked, thereby improving the structural stability of the energy storage apparatus 100.

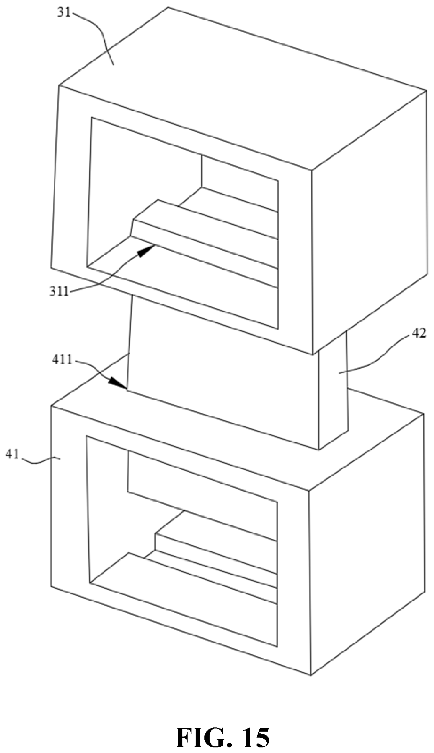

In some embodiments, with reference to FIG. 6 to FIG. 9, and FIG. 15, the plurality of bins 10 include the first bin 3 and the second bin 4, the first bins 3 are located above the second bins 4, limiting pins 42 are arranged at the bottoms of the first bins 3, limiting holes 411 are formed in the tops of the second bins 4, and the limiting pins 42 are clamped into the limiting holes 411.

The bins 10 include the first bins 3 and the second bins 4, the same bin 10 is the first bin 3 relative to the lower bin 10, the same bin 10 is the second bin 4 relative to the upper bin 10, and one bin 10 can be the first bin 3 or the second bin 4. That is, the limiting pin 42 can be arranged at the bottom of one bin 10, while the limiting hole 411 is formed in the top.

Therefore, by the limiting pins 42 and the limiting holes 411 in matching, every two adjacent bins 10 in the height direction prevented from moving mutually by a simple structure.

The limiting holes 411 in the tops of the second bins 4 can be openings used for hoisting the bins 10, therefore, in the hoisting stage of the bins 10, the bins 10 are hoisted through the openings; and after the bins 10 are hoisted, the openings in the tops of the bins 10 are matched with the limiting pins 42 at the bottoms of the adjacent upper bins 10, thereby limiting the two adjacent bins 10, and the structure of the bins 10 can be simplified.

In some embodiments, with reference to FIG. 6 to FIG. 9, and FIG. 15, first limiting members 31 are arranged at the bottoms of the first bins 3 and are provided with limiting slots 311, second limiting members 41 are arranged on the tops of the second bins 4 and are provided with the limiting holes; and both ends of the limiting pins 42 are correspondingly clamped into the limiting slots 311 and the limiting holes 411.

The second limiting members 41 can be the above hoisting parts, and the limiting holes 411 can be the above openings. The limiting holes 411 can also be holes formed in the first bins 3.

In the embodiments, during stacking the bins 10 in the height direction, the limiting pins 42 are matched with the limiting slots 311 in the upper bin 10 of every two adjacent bins 10 and matched with the limiting holes 411 in the lower bin 10 of every two adjacent bins 10, and therefore the purpose of limiting relative movement of the two adjacent bins 10 is achieved through the simple structure.

In some embodiments, with reference to FIG. 10 to FIG. 13, the first direction is the height direction of the bins 10, and in the height direction of the bins 10, the height of some of the plurality of bins 10 is not equal to the height of the other bins 10.

For example, the heights of the upper bins 10 can be greater than the heights of the lower bins 10, or the heights of the upper bins 10 is less than the heights of the lower bins 10.

Therefore, the flexibility of the capacity of the bins 10 can be improved, and different requirements are met.

In some embodiments, the sizes of the m bins 10 in the height direction are equal.

Therefore, the manufacturing process is simplified, and the cost is reduced.

The embodiment of the present disclosure further provides the energy storage apparatus 100, the energy storage apparatus 100 includes the bins 10 and the plurality of energy units 2, and the plurality of energy units 2 are accommodated in the bins 10. The sizes of the bins 10 in the first direction are greater than one third of the size of the standard container in the first direction and less than one half of the size of the standard container in the first direction; or, the sizes of the bins 10 in the first direction are greater than one half of the size of the standard container in the first direction and less than the size of one standard container in the first direction.

The plurality of energy units 2 are accommodated in the bins 10, and can be the battery modules or battery packs.

The sizes of the bins 10 in the first direction are set to be less than the size of one standard container in the first direction; by reducing the sizes of the bins 10, the manufacturing cost of the energy storage apparatus 100 can be reduced, and moreover, the total weight of the bins 10 that accommodate the energy units 2 and the like can be reduced, which is conducive to relieving the problem of overweight in transportation, and reducing the transportation cost of the energy storage apparatus 100. The sizes of the bins 10 cannot be infinitely small, and when the sizes of the bins 10 in the first direction is greater than or equal to one third of the size of the standard container in the first direction, the energy storage apparatus 100 is high in manufacturability, high in volume energy density and more convenient to transport and mount.

The energy storage apparatus 100 provided by the embodiment of the present disclosure includes the first bins 3, the second bins 4, the control module 30, the thermal management module 20, and the plurality of energy units 2; and the plurality of energy units 2 are accommodated in the first bins 3 and the second bins 4, and the first bins 3 are located above the second bins 4. The sizes of the first bins 3 in the first direction and the sizes of the second bins 4 in the first direction are less than the sizes of one standard container in the first direction, and the sum of the sizes of the first bins 3 in the first direction and the sizes of the second bins 4 in the first direction is less than the sum of the size of one standard container in the first direction. The first bins 3 include the energy bins 11 and the control bins 12, the control bins 12 and the energy bins 11 are arranged in the length direction of the first bins 3, the thermal management module 20 is arranged in the control bins 12 of the first bins 3, and the plurality of energy units 2 are accommodated in the energy bins 11 of the first bins 3. The second bins 4 include the energy bins 11 and the control bins 12, the control bins 12 and the energy bins 11 are arranged in the length direction of the second bins 4, the control module 30 is arranged in the control bins 12 of the second bins 4, and the plurality of energy units 2 are accommodated in the energy bins 11 of the second bins 4. The thermal management module 20 in the first bins 3 can control the temperature of the plurality of energy units 2 in the first bins 3 and the plurality of energy units 2 in the second bins 4, and the control module 30 in the second bins 4 can perform electrical control on the plurality of energy units 2 in the first bins 3 and the plurality of energy units 2 in the second bins 4. The energy storage apparatus 100 is divided into the first bins 3 and the second bins 4, all parts of the energy storage apparatus 100 are accommodated in the first bins 3 and the second bins 4, and therefore, the sizes of the bins 10 are reduced, the manufacturing cost of the energy storage apparatus 100 is reduced, the total weight of the bins 10 provided with the energy units 2 and other parts can be reduced, thereby relieving the problem of overweight in transportation and reducing the transportation cost of the energy storage apparatus 100. After the first bins 3 and the second bins 4 are stacked together in the first direction, the sum of the sizes of the first bins 3 and the sizes of the second bins 4 in the first direction is less than the size of one standard container in the first direction, that is, the plurality of bins 10 can occupy the space of one or more standard containers, thereby further reducing the transportation cost of the energy storage apparatus 100. In addition, all the parts of the energy storage apparatus 100 are integrated in the bins 10, the bins 10 can be connected to the PCS and the EMS after being stacked on site, which is conducive to reducing the workload of assembling on site, thereby improving the assembling efficiency, and facilitating the customers to use.

The foregoing are only preferred embodiments of the present disclosure and are not intended to limit the present disclosure, which is subject to various changes and variations for those skilled in the art. Any modifications, equivalent replacements, improvements, etc., made within the spirit and principles of this disclosure are included in the scope of protection of this disclosure.

## Claims

1. An energy storage apparatus, comprising:
a plurality of bins which are arranged in a first direction;
a plurality of energy units which are accommodated in at least one bin; and
a control module configured to perform electrical control on the plurality of energy units;
in which, a size of at least one of the plurality of bins in the first direction is less than a size of one standard container in the first direction, the sum of the sizes of the plurality of bins in the first direction is less than the sum of the sizes of one or more standard containers in the first direction, and the first direction is a length direction or a width direction or a height direction of the bins.

2. The energy storage apparatus according to claim 1, wherein m bins are provided, the sum of the sizes of m1 bins in the m bins in the first direction is less than the sum of the sizes of n standard containers in the first direction, m is greater than or equal to m1, m1 is greater than or equal to 2, and m1 is greater than n.

3. The energy storage apparatus according to claim 2, wherein m1=2, n=1; or, m1=3, n=1; or, m1=3, n=2.

4. The energy storage apparatus according to any one of claims 1 to 3, wherein the first direction is the height direction of the bins, the sizes of the bins in the length direction are consistent with the sizes of the standard containers in the length direction, and the sizes of the bins in the width direction are consistent with the sizes of the standard containers in the width direction; and/or,
the size of each bin in the first direction is less than the size of one standard container in the first direction.

5. The energy storage apparatus according to any one of claims 1 to 4, comprising a thermal management module which is configured to manage temperatures of the plurality of energy units of the energy storage apparatus.

6. The energy storage apparatus according to claim 5, wherein m bins are provided, the plurality of energy units are accommodated in the m bins, and the thermal management module is configured to manage the temperatures of the plurality of energy units in the m bins.

7. The energy storage apparatus according to any one of claims 1 to 6, wherein m bins are provided, the plurality of energy units are accommodated in the m bins, and the control module is configured to perform electrical control on the plurality of energy units in the m bins.

8. The energy storage apparatus according to any one of claims 1 to 7, wherein the control module is accommodated in at least one bin.

9. The energy storage apparatus according to claim 7 or 8, wherein the thermal management module is accommodated in at least one bin.

10. The energy storage apparatus according to any one of claims 5 to 7, wherein at least some of the bins are internally provided with energy bins and control bins, the energy bins are configured to accommodate at least one energy unit, and at least part of the control module and/or at least part of the thermal management module are/is accommodated in the control bins.

11. The energy storage apparatus according to claim 10, wherein at least some of the control bins and energy bins are arranged in the height direction of the bins; and/or,
at least some of the control bins and energy bins are arranged in the length direction of the bins.

12. The energy storage apparatus according to claim 10 or 11, wherein at least some of the control bins accommodate the thermal management module, and the thermal management module is located in the topmost bin.

13. The energy storage apparatus according to any one of claims 10 to 12, wherein at least some of the control bins accommodate the control module; the control module and the energy bins are arranged in the height direction of the bins; or,
the control module and the energy bins are arranged in the length direction of the bins.

14. The energy storage apparatus according to any one of claims 10 to 13, wherein at least some of the bins comprise first separators;
the first separators are arranged between the energy bins and the control bins, and the energy bins and the control bins share the first separators; and/or,
a plurality of control bins are provided, the first separators are arranged between adjacent control bins, and the adjacent control bins share the first separators.

15. The energy storage apparatus according to claim 14, wherein the first separators are filled with heat insulation media.

16. The energy storage apparatus according to any one of claims 5 to 15, wherein the sizes of the bins which accommodate the thermal management module in the first direction are greater than the sizes of other bins in the first direction.

17. The energy storage apparatus according to any one of claims 5 to 7, wherein at least some of the control module is arranged outside the bins; and/or,
at least part of the thermal management module is arranged outside the bins.

18. The energy storage apparatus according to any one of claims 5 to 17, comprising pipeline bins which are at least configured to accommodate some of connecting pipelines among the control module, the thermal management module or the energy units.

19. The energy storage apparatus according to claim 18, wherein each bin is provided with the corresponding pipeline bin; or, some of the bins are provided with the pipeline bins, while other bins are not provided with the pipeline bins.

20. The energy storage apparatus according to claim 18 or 19, wherein at least some of the bins are internally provided with the energy bins and the control bins, the energy bins are configured to accommodate at least one energy unit, at least part of the control module and/or at least part of the thermal management module are/is accommodated in the control bins, the pipeline bins are arranged in the bins, and the pipeline bins and the energy bins are arranged in the length direction of the bins.

21. The energy storage apparatus according to claim 20, wherein at least some of the bins comprise second separators which are arranged between the energy bins and the pipeline bins, and the energy bins and the pipeline bins share the second separators.

22. The energy storage apparatus according to claim 20, wherein at least some of the bins comprise third separators which are arranged between the pipeline bins and at least some of the control bins, and the pipeline bins and at least some of the control bins share the third separators.

23. The energy storage apparatus according to any one of claims 13 to 15, wherein at least some of the bins comprise fourth separators which divide the control bins into first bin bodies and second bin bodies, the first bin bodies and the second bin bodies share the fourth separators, the first bin bodies are configured to accommodate the thermal management module, and the second bin bodies are configured to accommodate the control module.

24. The energy storage apparatus according to claim 23, wherein the first bin bodies and the second bin bodies are arranged in the width direction of the bins, and the first bin bodies are arranged on front sides of the second bin bodies.

25. The energy storage apparatus according to any one of claims 5 to 16 and claims 18 to 24, wherein the plurality of the bins comprise first bins and second bins, the first bins are located above the second bins, at least the first bins accommodate the plurality of the energy units, the thermal management module is arranged in the first bins and are arranged in the length direction of the first bins with the plurality of the energy units, and the control module is arranged in the first bins and/or the second bins.

26. The energy storage apparatus according to claim 25, wherein at least the second bins accommodate the plurality of energy units, and the control module is arranged in the second bins and are arranged in the length direction of the second bins with the plurality of energy units.

27. The energy storage apparatus according to claim 12 or 16, wherein at least some of the bins are provided with ventilation openings in top walls and/or side walls, and the ventilation openings are configured to perform ventilation on the thermal management module.

28. The energy storage apparatus according to any one of claims 1 to 27, wherein each bin accommodates the plurality of energy units; at least some of the bins comprise first connectors which are electrically connected to the control module; each bin comprises a second connector; the second connectors are electrically connected to the plurality of energy units; and each first connector is matched with the corresponding second connector.

29. The energy storage apparatus according to any one of claims 5 to 28, wherein each bin accommodates the plurality of energy units; the energy storage apparatus comprises a plurality of battery apparatuses, each battery apparatus comprising a thermal management part and the plurality of energy units; and the thermal management parts are configured to regulate the temperatures of the energy units;
at least some of the bins comprise third connectors, each bin comprises a fourth connector, the third connectors communicate with the thermal management module, the fourth connectors communicate with the thermal management parts, and each third connector is matched with the corresponding fourth connector.

30. The energy storage apparatus according to claim 29, wherein the thermal management module communicates with the plurality of thermal management parts through liquid cooling pipelines, the liquid cooling pipelines comprise main pipelines and a plurality of branch pipelines, the plurality of branch pipelines are connected to the main pipelines in parallel, the main pipelines communicate with the thermal management module, and the plurality of branch pipelines communicate with the plurality of thermal management parts respectively; and the main pipelines are located above the plurality of battery apparatuses, or, below the plurality of battery apparatuses.

31. The energy storage apparatus according to any one of claims 1 to 30, wherein the control module comprises at least one of a main control module, a power distribution module, a general control module, and a fire control module.

32. The energy storage apparatus according to any one of claims 1 to 31, wherein the energy units are battery cells, and the weight of a single energy unit is 5-60 kg.

33. The energy storage apparatus according to any one of claims 1 to 32, comprising an energy storage cabinet which comprises the bins and parts arranged in the bins, wherein the weight of the energy storage cabinet is M, and M is less than or equal to 35 tons.

34. The energy storage apparatus according to any one of claims 1 to 33, comprising the energy storage cabinet which comprises the bins and the parts arranged in the bins, wherein the weight of the energy storage cabinet is M, the total weight of energy units in the bins is M1, (M1/M) × 100% ≥ 60%.

35. The energy storage apparatus according to claim 34, wherein (M1/M) × 100% ≥ 80%.

36. The energy storage apparatus according to any one of claims 1 to 35, comprising the energy storage cabinet which comprises the bins and the parts arranged in the bins, wherein the weight of the energy storage cabinet is M; the plurality of battery apparatuses are arranged in the bins, each comprising a box and the plurality of energy units; the plurality of energy units are accommodated in the box; and the total weight of the battery apparatuses is M2, 70% ≤ (M2/M) × 100% ≤ 90%.

37. The energy storage apparatus according to any one of claims 1 to 36, wherein volumes of the bins are V, the total volume of the energy units in the bins is V1, (V1/V) × 100% ≥ 30%.

38. The energy storage apparatus according to claim 37, wherein (V1/V) × 100% ≥ 50%.

39. The energy storage apparatus according to any one of claims 1 to 38, wherein the volumes of the bins are V; the plurality of battery apparatuses are arranged in the bins, each comprising the box and the plurality of energy units; the plurality of energy units are accommodated in the box; and the total volume of the battery apparatuses is V2, 50% ≤ (V2/V) × 100% ≤ 80%.

40. The energy storage apparatus according to any one of claims 1 to 39, comprising the energy storage cabinet which comprises the bins and the parts arranged in the bins, wherein an energy of the energy storage cabinet is E, the sizes of the bins in the length direction are a, the sizes of the bins in the width direction are b, 250KW/*m*² ≤ E/(a × b) ≤ 700KW/*m*².

41. The energy storage apparatus according to claim 40, wherein 450KW/*m*² ≤ E/(a × b) ≤ 600KW/*m*².

42. The energy storage apparatus according to any one of claims 1 to 41, wherein every two adjacent bins are welded, clamped, locked or connected by a fixing member in the height direction.

43. The energy storage apparatus according to any one of claims 1 to 42, wherein the plurality of bins comprise the first bins and the second bins, the first bins are located above the second bins, limiting pins are arranged at the bottoms of the first bins, limiting holes are formed in the tops of the second bins, and the limiting pins are clamped in the limiting holes.

44. The energy storage apparatus according to claim 43, wherein first limiting members are arranged at the bottoms of the first bins and are provided with limiting slots; second limiting members are arranged on the tops of the second bins and are provided with limiting holes; and both ends of the limiting pins are clamped in the limiting slots and the limiting holes respectively.

45. The energy storage apparatus according to any one of claims 1 to 44, wherein m bins are provided, and the first direction is the height direction of the bins; the energy storage apparatus further comprises connecting mechanisms which are configured to connect every two adjacent bins in the height direction;
the connecting mechanisms comprise supporting members which are arranged between every two adjacent bins in the height direction; the sum total of the sum of the sizes of the m1 bins in the m bins in the height direction and the sum of the sizes of m1-1 supporting members in the height direction is less than the sum of the sizes of n standard containers in the height direction, m is greater than or equal to m1, m1 is greater than or equal to 2, and m1 is greater than n.

46. The energy storage apparatus according to any one of claims 1 to 45, wherein the first direction is the height direction of the bins, and in the height direction of the bins, the heights of some of the plurality of bins are not equal to the heights of other bins; or the plurality of bins in the height direction have the same size.

47. The energy storage apparatus according to any one of claims 1 to 46, wherein the first direction is the height direction of the bins, and the standard containers are 20-foot standard containers, with the heights of 2,896 mm, 2,591 mm or 2,438 mm.

48. The energy storage apparatus according to any one of claims 20 to 24, wherein at least some of the bins are internally provided with the energy bins and the control bins, the energy bins are configured to accommodate at least one energy unit, and at least part of the control module and/or at least part of the thermal management module are/is accommodated in the control bins; at least one side of the energy bins in the width direction is provided with a first bin door, and at least one side of the control bins and/or the pipeline bins in the width direction is provided with a second bin door, or, the sides, deviating from the energy bins, of the control bins and/or the pipeline bins in the length direction are provided with the second bin doors.

49. An energy storage apparatus, comprising bins and a plurality of energy units, wherein the energy units are accommodated in the bins;
sizes of the bins in a first direction are greater than one third of sizes of standard containers in the first direction and less than one half of the sizes of the standard containers in the first direction; or,
the sizes of the bins in the first direction are greater than one half of the sizes of the standard containers in the first direction and less than the size of one standard container in the first direction.

50. An energy storage system, comprising a power conversion apparatus and the energy storage apparatus according to any one of claims 1 to 49, wherein the power conversion apparatus is configured to electrically connect a power generation apparatus with the energy storage apparatus.

51. A charging network, comprising a charging pile and the energy storage apparatus according to any one of claims 1 to 49 or the energy storage system according to claim 50, wherein the energy storage apparatus is configured to provide electric energy for the charging pile.
